# EUROPEAN PATENT SPECIFICATION

(11) **EP 3 646 277 B1**
(45) Date of publication and mention of the grant of the patent: **02.04.2025**
(21) Application number: 18823979.2
(22) Date of filing: 26.06.2018
(51) Int. Cl.: G06Q 50/00, A47F 10/06

(54) **NETWORKING ROUNDTABLE CONTROLLER, SYSTEM AND METHOD AND NETWORKING ENGINE**
VERNETZUNGSRUNDTISCHSTEUERUNG, SYSTEM UND VERFAHREN UND VERNETZUNGSMASCHINE
CONTRÔLEUR DE TABLE RONDE DE MISE EN RÉSEAU, SYSTÈME ET PROCÉDÉ ASSOCIÉS ET MOTEUR DE MISE EN RÉSEAU

(30) Priority: 26.06.2017 US 201762524658 P; 04.07.2017 US 201762528464 P; 09.02.2018 US 201862628801 P; 08.05.2018 US 201862668318 P; 15.05.2018 US 201862671441 P
(43) Date of publication of application: 06.05.2020
(73) Proprietor: Moetteli, John Brent, 9320 Arbon (CH)
(72) Inventor: Moetteli, John Brent, 9320 Arbon (CH)
(74) Representative: Mötteli-Mantelli, Novella
(86) International application number: PCT/US2018/039408
(87) International publication number: WO 2019/005734

(56) References cited:
- EP-A1- 2 709 043
- WO-A1-2007/131381
- WO-A1-2012/163801
- CN-A- 104 856 469
- CN-A- 105 832 049
- CN-U- 202 941 681
- CN-U- 203 353 977
- CN-U- 204 427 273
- KR-A- 20040 075 133
- KR-A- 20100 115 943
- KR-B1- 101 274 362
- KR-Y1- 200 222 266
- KR-Y1- 200 222 266
- US-A- 4 237 796
- US-A1- 2002 167 486
- US-A1- 2008 228 875
- US-A1- 2011 050 442
- US-A1- 2013 010 053
- US-A1- 2014 040 368
- US-A1- 2014 372 290
- US-A1- 2015 172 227
- US-B1- 6 964 370

## Description

### Copyright & Legal Notice

A portion of the disclosure of this patent document contains material which is subject to copyright protection. The Applicant has no objection to the facsimile reproduction by anyone of the patent document or the patent disclosure as it appears in the Patent and Trademark Office patent file or records, but otherwise reserves all copyright rights whatsoever. Further, no references to third party patents or articles made herein is to be construed as an admission that the present invention is not entitled to antedate such material by virtue of prior invention.

### Background of the Invention

This invention relates to means of making contact with other individuals (sometimes herein called "users" or "members") using software, typically a social media networking system such as Facebook^{™} or an online community service system, and/or dedicated hardware. In addition, the invention relates to systems and methods for enabling connection with one or more members having similar preferences by providing a more efficient and effective means of making connections, as well as creating communities.

Several patents, namely KR200222266Y Y1, WO2012163801 Al, WO2007131381 Al, CN204427273U, CN 1 05832049 A, US6964370 B1, US2011050442 A1, KR20100115943 A, and US2002167 486 A1 relate to the claimed invention.

Social networking sites are varied. They can incorporate a range of new information and communication tools, operating on desktops and on laptops, on mobile devices such as tablet computers and smart phones. They may feature digital photo/video/sharing and "web logging" diary entries online (blogging). Online community services are sometimes considered social-network services, though in a broader sense, a social-network service usually provides an individual-centered service whereas online community services are group-centered. Defined as "websites that facilitate the building of a network of contacts in order to exchange various types of content online," social networking sites provide a space for interaction to continue beyond in person interactions. These computer mediated interactions link members of various networks and may help to both maintain and develop new social ties. Social networking sites allow users to share ideas, digital photos and videos, posts, and to inform others about online or real-world activities and events with people in their network. While in-person social networking - folk dancing, community social events and gathering in a village market to talk about events - has existed since the earliest development of towns, the Web enables people to connect with others who live in different locations, ranging from across a city to across the world. Depending on the social media platform, members may be able to contact any other member. In other cases, members can contact anyone they have a connection to, and subsequently anyone that contact has a connection to, and so on. The success of social networking services can be seen in their dominance in society today, with Facebook having a massive 2.13 billion active monthly users and an average of 1.4 billion daily active users in 2017. LinkedIn^{™}, a career-oriented social-networking service, generally requires that a member personally know another member in real life before they contact them online. Some services require members to have a preexisting connection to contact other members. Such services and systems have provided users with an unprecedented way of making contacts. However, such systems provide little or nothing to facilitate face to face contact or to make such contact more likely to create lasting relationships.

Hardware used in such social networking has typically been computer devices, tables and chairs, and dance floors. Seating exists which facilitates contact with others. Round tables exist which place persons opposite to each other in a facing relationship. Lazy Susans exist for placement at the center of the table to facilitate the selection of food or condiment items for use on food. However, once seated, changing the seating relationship requires getting up, convincing some else to get up and to change seats. This creates an awkward and uncomfortable and sometimes impolite situation which is to be avoided to conform to accepted social etiquette.

US Patent No. 9,830,562 describes a system and method for mobile social networking within a target area The method includes receiving a social networking profile within a target area. The social networking profile has at least one user preference. The method also includes broadcasting the social networking profile to one or more members of the social network within the target area. The method further includes searching within the target area for the one or more members having a preference that is the same or similar to the at least one user preference. The system and method additionally includes enabling contact with the one or more members having the same or similar user preference. This system and method does not, however, create communities of similar or complementary interests or provide any specific means of connecting with others face to face. Neither does it provide a means of communicating what two engaging users may share in common during the engagement.

Speed dating or speed networking is known, in which groups of males or females, encoded with numbers, nicknames or handles, typically numbering up to ten, sit around a conventional table with members of one interest, e.g., the opposite sex, facing them, and, with the help of a moderator, are asked to begin conversations limited to 3 to 8 minutes. After this period, they are asked by the moderator to move from one seat to another so as to face another participant and to begin another conversation of limited time. They are typically forbidden from sharing their contact information but instead, may share a handle, or number. After the event, the participants indicate which persons they would like to meet again. Such face to face contact is significantly more efficient than online dating or online networking. According to the New York Times, participants in speed dating, for example, experience an average of 2 in 10 or 3 in 10 matches whereas online dating participants only find a compatible match with 1 in 100 or fewer of the profiles they study. As reported by the BBC, in the Science of Love, it takes only between 90 seconds and 4 minutes of face to face interaction to determine attraction, which gives speed dating a significant advantage over online dating. Nevertheless, the moderator must deal with persons who are shy, who are monopolizing or pushy, in an attempt to provide an egalitarian opportunity of contact between the participants. In addition, the participants must be coaxed to move from one seat to another. Where human nature gets involved, some participants monopolize others and others are slow to change seats and make another contact.

As mentioned above, other forms of human contact methods exist. Traditionally, folk dancing to songs of a set time was a means used for people to make face to face contact, even short conversation, with one another in an egalitarian environment, in which roughly equal time is spent with each individual during the course of the song. Today, rather than engaging in these useful networking activities, the music is loud, the room is dark and the dancing style is free, not conducive to equalitarian contact and impossible to carry on any kind of a conversation.

In addition, traditionally, people tended to living and work in the same location, not wandering too far from home when travelling. This was conducive to the development of more intimate relationships, where a mutual friend or family member who knows two persons very wall was able to put them in contact while mentioning at least one point that they had in common. Today, work and home is geographically distant from one another. Mutual friends are rare, particularly mutual friends that can put persons in contact with the aid of a mention of a point of common interest. Still further, church attendance is generally down, thereby reducing a reliable source of mutual friends that can put people together.

What is needed is a system or method that overcomes these drawbacks of modern society. Specially, what is needed is a system and method that fills our modern world's void left by the fading practice of traditional folk dance. Still further, what is needed is a system and method that makes speed dating or speed networking more efficient and less dependent on the human factor.

### Summary of the Invention

Claims 1-14 disclose the current invention. An online social networking system and method of the invention uses software and/or dedicated hardware tools to bring persons sharing common interests into engagement, preferably face to face is defined in the attached claims. The online social networking system includes personal computing devices connected in a network comprising a server or servers hosting dedicated control software of which method steps are executed by a processor so as to access a database of user profile data of users in order to operate the said social networking system, The system, during a registration step, provides the users an opt-in, permission and/or preferences selection device such as a drop-down menu, enabling users to provide permission
(a) to have a recommendation contact engine compare and share their user data such as user characteristics and preferences with those of other users for which matches on the compared and sharable user data are determined, and
(b) based on matching criteria, to be contacted via the recommendation contact engine.

The system is adapted to contact users identified by the recommendation contact engine as having common interests and invite such users to a meeting. The system is further adapted to propose times and/or locations for such suggested meetings, and to register user-indicated-suitable-dates for such meeting. Once an engagement such as a virtual or physical face to face meeting between two recommended users is commenced, the system is adapted to provide engaging users with a user communication device such as a display adapted to indicate to the users what the matching user characteristics are, thereby facilitating identification of common interests between users during an engagement between users.

In one aspect, a system is used which includes disposition devices such as seating or standing supports and/or counter/table arrangements. The system is adapted to dispose at least three persons in which a guiding system guides relative movement of at least one person of the at least three persons to place the at least one person so as to successively face one of the at least two remaining persons for a desired time period (typically 3 to 8 minutes). The system facilitates networking in a manner which reduces awkward situations and provides discipline and efficiency in facilitating contact with a plurality of individuals. A controller controls the disposition for improved networking, including considering occupancy on the disposition devices. In another aspect, the system is an app operating on a smartphone which may or may not use the seating system of the invention. In addition, the invention creates communities and provides effective and efficient means of connecting with others.

An object of the invention is to facilitate networking in a manner which reduces awkward situations and provides discipline and efficiency in facilitating contact with a plurality of individual.

An object of the invention is to fill the technological gap which exists between, for example, currently known social enterprises such as STARBUCKS^{®} and FACEBOOK^{®}.

### Brief Description of the Drawings

**FIG. 1A** is a perspective view of a first embodiment of the system of the invention.
**FIG. 1B** is a side view of the embodiment of **FIG. 1A****.**
**FIG. 2A** is a cross-sectional view of a first embodiment of the rack and pinion system of the invention.
**FIG. 2B** is a cross-sectional view of a second embodiment of the rack and pinion system of the invention.
**FIG. 3** is a perspective view of an alternate embodiment of the system of the invention.

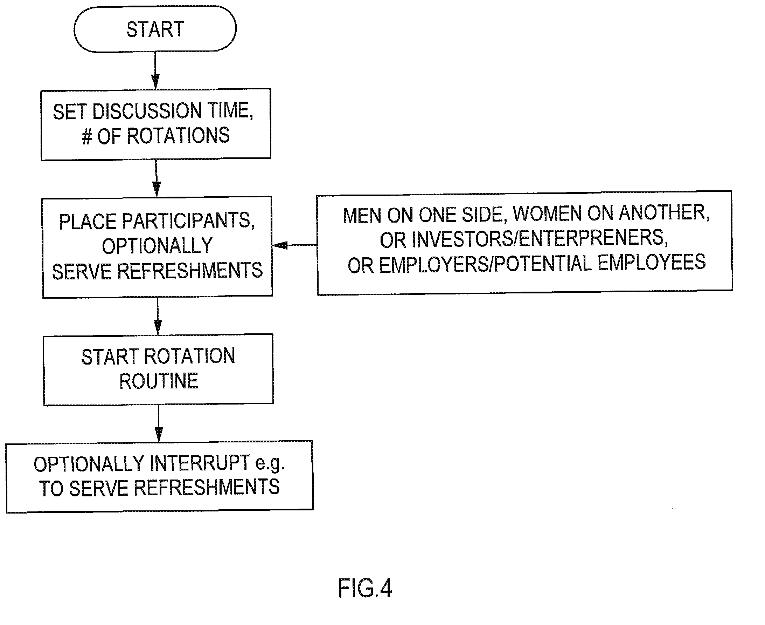

**FIG. 4** is a flow chart of a method of the invention.
**FIG. 5A** is a perspective view of an alternate embodiment of the invention.
**FIG. 5B** is a top view of an alternate embodiment of the invention of **FIG. 5A****.**
**FIG. 6** is a top view of a variation of the alternate embodiment of **FIG. 5A****,** in which more fixed seating is provided.
**FIG. 7** is a perspective view of the central translation device having privacy baffles.
**FIG. 8** is a perspective view of a simple embodiment of the invention in which a couch is disposed on the translating platform.
**FIG. 9** is a perspective view of an even simpler embodiment, in which mobile seating is disposed on the translating platform.
**FIG. 10** is a perspective view of a large ring shaped arrangement of the invention having a central bar or a conductor seating arrangement within the translatable disposition device of the invention.
**FIG. 11** is a perspective view of an arrangement of the invention in which no seating is displaced, but rather, a guiding hoop guides persons to move from one place to another on foot.
**FIG. 12** is a schematic diagram of a controller of the invention.
**FIG. 13** is a flow chart of an app which mimics the invention in the virtual world.
**FIG. 14** is a perspective view of the simplest possible variant of the invention, in which a single central seat, preferably with privacy baffles, is turned to successively or according to commands of the controller, dispose that person before other persons in fixed disposition devices.
**FIG. 15** is a cross sectional view of a weight sensor arrangement used in the instant invention.
**FIG. 16** is a perspective view of another embodiment of the invention, similar to that disclosed in **FIG. 11****,** but using a wireless proximity sensor between a base unit and a mobile unit that sounds an alarm when the distance between the same exceeds a certain distance, encouraging participants to respect their rendezvous while not physically moving any participants.
**FIG. 17A** is a cross-sectional view of a guard of the invention.
**FIG. 17B** is a cross-sectional view of an alternate guard of the invention.
**FIG. 18** is a schematic view of yet another embodiment of the invention using a rotating platform supporting rotating chairs.
**FIG. 19** is a schematic view of still another embodiment of the invention using rotating chairs disposed in an array.
**FIG. 20** is an example of an array of the rotating chairs of the invention.
**FIG. 21** is another example of an array, showing sequential matches.
**FIG. 22** is a perspective view of a rotating chair of the invention with a sound gathering bonnet.
**FIG. 23** is a perspective view of another embodiment of the invention.
**FIG. 24** is an exploded view of the seat of **FIG. 19****.**
**FIG. 25** is a graphical representation of the building up of all possible unique connections using the hardware of the invention.
**FIG. 26** is a graphical representation of the seat changes believed required in order to maximize the number of contacts in three stages.

Those skilled in the art will appreciate that elements in the Figures are illustrated for simplicity and clarity and have not necessarily been drawn to scale. For example, dimensions may be exaggerated relative to other elements to help improve understanding of the invention and its embodiments. Furthermore, when the terms 'first', 'second', and the like are used herein, their use is intended for distinguishing between similar elements and not necessarily for describing a sequential or chronological order. Moreover, relative terms like 'front', 'back', 'top' and 'bottom', and the like in the Description and/or in the claims are not necessarily used for describing exclusive relative position. Those skilled in the art will therefore understand that such terms may be interchangeable with other terms, and that the embodiments described herein are capable of operating in other orientations than those explicitly illustrated or otherwise described.

### Detailed Description of the Preferred Embodiment

The following description is not intended to limit the scope of the invention in any way as they are exemplary in nature, serving to describe the best mode of the invention known to the inventor as of the filing date hereof.

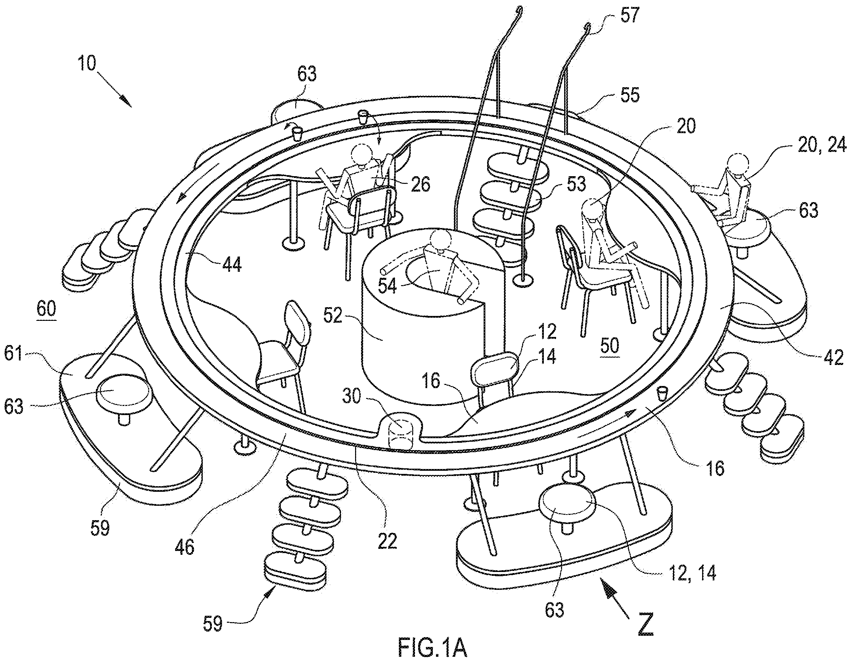

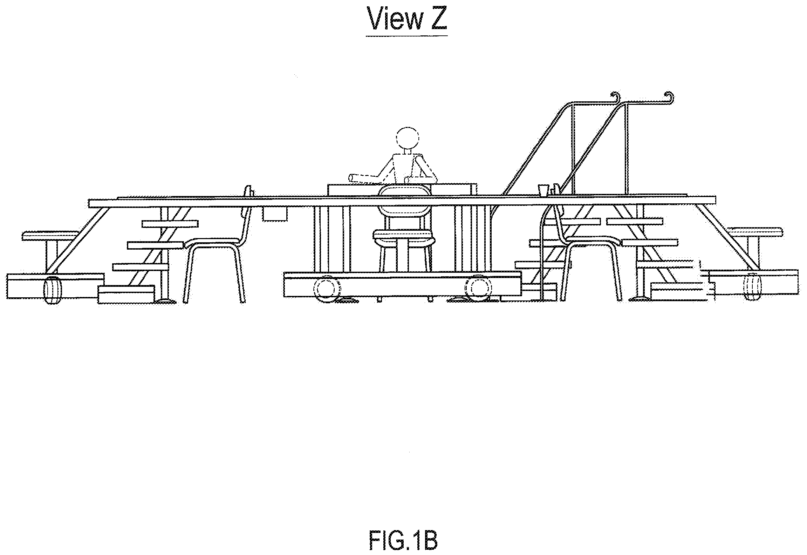

Referring now to **FIGs. 1A** and **1B****,** a disposition system 10 includes disposition devices 12 such as seating or standing supports 14 and/or counter/table arrangements 16. The system 10 is adapted to dispose at least three persons 20. In this embodiment, up to 16 unique pairings can be made without participants changing seats.

In this system 10, a guiding system 22 guides relative movement of at least one person 24 of the at least three persons to place the at least one person 24 so as to successively face one 26 of the at least two remaining persons for a desired time period. The control system of the invention then applies an algorithm which considers the sensed inputs and then controls movement of the device to divide the face-to-face contact time between the seated individuals in an equitable manner. For example, when one is sensed in the middle rotating seats, and two or more on the outer ring of seats, the system will divide the face time of the person on the central seating between those sensed as present on the outer seating. If two are on the middle rotating seats, and one in a seat of the outside fixed seats, the system brings each of the two in the middle alternatingly to the one on the outside fixed seat. The typical contact period allowed for each interaction is 8 minutes. However, where only one is located on the rotating seat and one on the fixed seats, these two persons are brought face to face and may be allowed to remain engaged in conversation until someone else joins by sitting in a seat of the system. Consequently, the algorithm uses presence inputs transmitted to the processor by presence sensors to select a suitable engagement routine. In one embodiment, inside the seat, a pressure sensor such as a silicone-filled "bladder", and an electronic control unit (ECU) is operably disposed. When someone sits on the seat, the pressure sensor signals the occupant's weight to the ECU. The ECU then sends that data to the processor. Alternatively, a strain guage on a cord or strap may be used to sense presence and/or weight, or, for that matter, a unique strain measurement that is relatively unique to each user sitting in a seat. Based on that information gathered from all seats, the system 10 can choose an appropriate movement algorithm. Where the system is to be used for speed networking or speed dating, then the type of engagement is selected by the purveyors of the system or organizers of the speed dating event (e.g. heterosexual, friendship, etc). If a heterosexual speed dating engagement, the system has means for indicating where persons of a particular sex are to be seated, in order to create the face-to-face experience (male to female, for example) desired.

Note that the system 10 (and the other embodiments herein described) is functional as conventional lounge seating even when the system not in operation (i.e., is not moving).

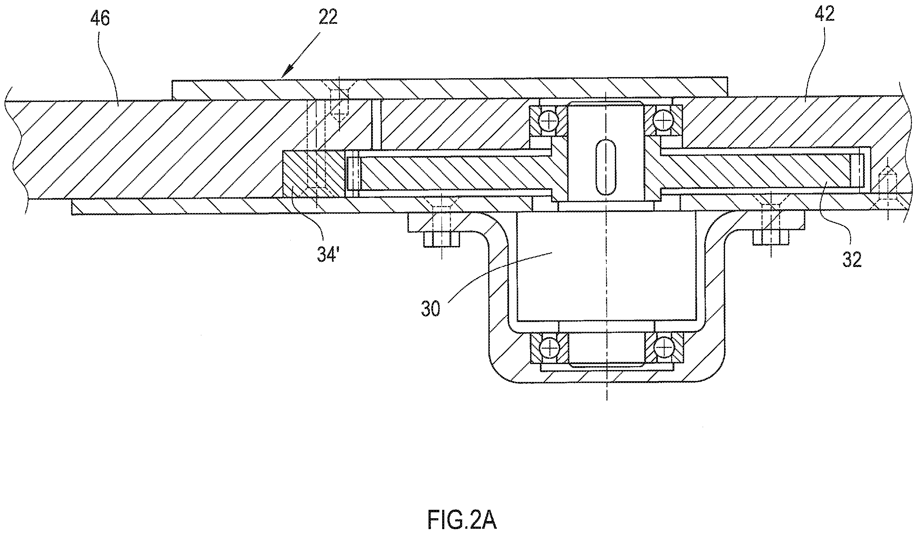

Referring now to **FIG. 2A****,** in an embodiment, the guiding system 22 is activated by a motor 30, preferably an electric gear motor with a pinion 32 which reacts against a rack 34, 34' located on a component against which relative motion is to be imparted. However, the system may simply be moved by hand, for example by a moderator rotating a wheel which activates the gear engaging the rack.

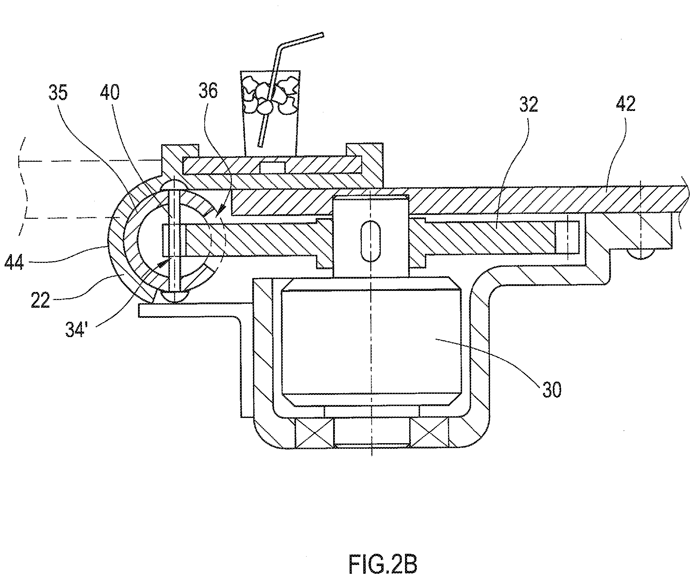

As depicted in **FIG. 2B****,** the rack 34' may be made up of a tube 35 having one side 36 removed through which bolts 40 extend, and which are placed along the entire length of the tube, such bolts acting as teeth in which the pinion gear 32 engages.

Of course, relative movement of one person with respect to another may be imparted by motors which activate wheels directly, the wheels contacting the ground which when combined with friction, imparts motion to the platform, thereby doing away with the need for the rack and pinion system. Still further, an axially located motor may be used with swivel casters on the outermost periphery of the platform also eliminates the need for a rack and pinion system.

The guiding system 22 is advantageously a rolling table 42 in the form of a circular ring, which engages a ringed track 44 or rack 34, 34', along which an adjacent and abutting circular table system 46 is guided along a circular path. Advantageously, the circular table system 46 is a circular ring which encloses an inner area 50, in which a bar 52 or and/or a conductor 54 (someone responsible for controlling the movement of the system) may be disposed, with a suitable bar providing a ready storage space within arm's reach. Two steps 53, 55 are placed inline with one another after each index movement from one position to another, in the drawing, every 90 degrees of movement. Handrails 57 provide for secure movement to and from the inside area 50 from the outside area 60.

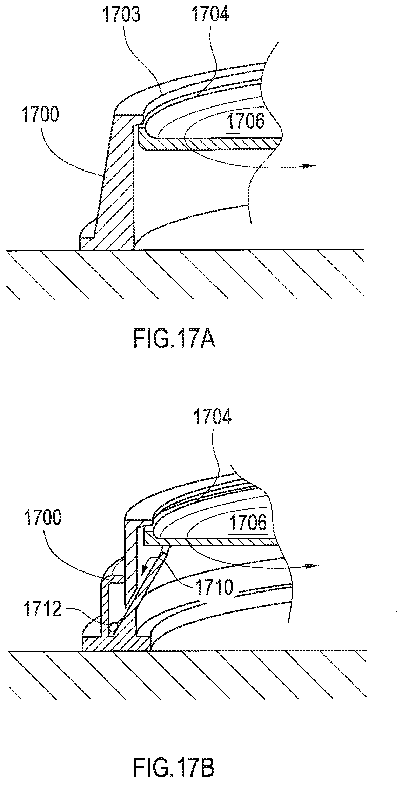

A safety switch mounted on the device such that it is within the reach of each participant optionally prevents movement of the guiding system when persons leave the system or are being disposed and, for whatever reason, a participant wishes for motion to stop. The location of the seated persons is sensed with optics, lasers, capacitive contact sensors, resistance sensors, proximity sensors or strain gauge/weight sensors, for example. The sensing of a person in an area of potential danger initiates the safety switch and overrides the system's command to initiate motion. In addition, guards (see **FIGs. 17A** and **17B**), made for example of rubber, preferably light weight rubber such as foam rubber (closed cell) may be used. The guards 1700, 1700' (a sort of skirt) rest on the floor 1702 but has a flange portion 1703 which extends above and over the lip 1704 of the rotating platform 1706, thereby preventing entry of toes, shoe tips, fingers, or loose items under the device. One embodiment 1700' includes a chute 1710 that allows items 1712 that may enter into the small space between the flange 1703 and the lip 1704 to slide away from the underside of the device, outward, in order to be easily retrieved through an aperture 1705 for example.

Clearly, the system is designed to minimize possible snag or pinch points in the system.

A challenge of the invention is providing a design that minimizes these possible snag or pinch points in the system. Consequently, all surfaces which move, and which find themselves close to the ground, are layered with thick foam rubber 59 of a wide depth so as to dispose the wheels sufficiently distant from feet or hands. The invention preferably incorporates a slip clutch which slips when too much resistance is met with, to prevent movement when a jam occurs.

The guards 1700, 1700' are light weight and so may be lifted up so as to access the underside of the device for cleaning or object recovery.

Of course, any number of persons may be accommodated with the system of the invention with an increase of size.

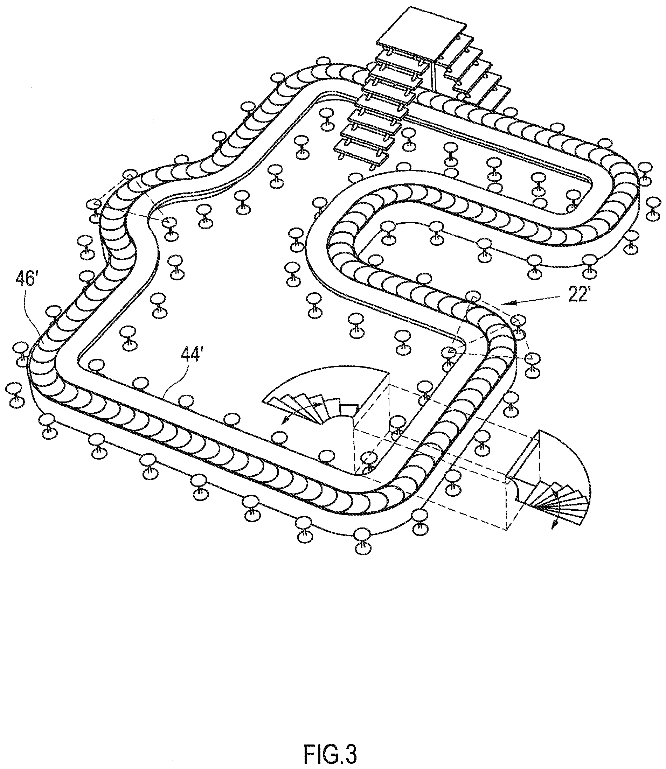

Referring now to **FIG. 3****,** in an alternate embodiment, the guiding system 22 is a conveyor arrangement 22', enabling the disposition system to take on essentially any form. Using this system, the disposition devices are translated from one place to another, making contacts with other participants along its path. Further, with all embodiments herein described, the inner area or the outer area may move, while the other remains stationary, or both may move relative to one another. It is critical with the disclosed invention that at least one person be transported so as to be placed before another person, and then after a time period, before still another person. Preferably, all persons participating have a person disposed before them with whom they may communicate, socialize, or interview.

The invention derives its advantage by being able to relocate persons in front of other persons after a desired time period. The desired time period may be set by a conductor or a computer software program running on a computer processor. In a speed dating situation, this amount of time is typically 3 to 8 minutes long. At the end of said set time period, after a suitable beep and potentially a visible or audible countdown providing time for participants to change seats, relative motion may be initiated to place persons in another facing relationship.

Note that in a typical speed dating situation, where the number of participants of one sex is limited to no more than 7 to 10, at the end of the desired time period, an opportunity may be provided to exchange contact information. However, it is typically the case in a speed dating situation that the actual sharing of contact information at the end of the period of contact is discouraged but is provided once the constituents of a pairing indicate that they are both interested in making contact. However, in a simple embodiment of the invention, the participants are not required to pre-register online before being able to use the device. Therefore, unless the participants do what is typically done, namely, provide a fictive name or phone number, a clever way of allowing persons to sign up after the fact must be provided. One means is to provide information cards conveniently located with respect to the device which enable a non-preregistered user to add a unique nickname or handle, which can be shared with other participants after the contact. This user then can, after the fact, register online using this nickname or handle. Where the nickname or handle is a common one, the system of the invention may allow the user to indicate which event he or she participated in, which then allows the other person to contact them online after the face-to-face contact.

Note as well that in a heterosexual speed dating configuration, only males or females would be located on the moving portion of the device, while the opposite sex would be seated on the fixed portion. In such a case, the portion, probably the moving platform, would be dedicated to females. This would then allow for the suggestion that females should locate themselves on the rotating portion by configuring the rotating portion in a more feminine look such as a pink color, while the male portion is configured in brown, a more masculine color.

In one embodiment, a payment system is provided to enable a participant to delay disengagement with another facingly disposed person. A means to accept payment to accelerate the change is also envisioned. The payment system is provided for taking payment from persons which wish to be disposed on the system, who wish to remain on the system for a longer term, or who which to be matched in a desired way.

In another embodiment, a conveyor system conveys refreshments or food between facing persons. Optionally, a sensor in the conveyor system detects drinks or food taken from the system for billing purposes. For this purpose, the register of the conveyed disposition device is tracked and known, and associated with adjacent or proximate persons on the system in order to properly attribute the taken drinks or food for billing purposes. A suitable system is described in US application no. 10/203,680, entitled Portable Sushi Counter with Conveyor Belt, filed January 31, 2001, the content of which is incorporated herein in its entirety and relied upon.

The disposition system ideally has a payment system for taking payment from persons which wish to be disposed on the system, and a mechanism for detecting whether enough persons have enrolled to use the system in order to make the use of the system interesting for the participating individuals. These surfaces would include the bases 61 of the moving chairs 63, and of the moving steps 55 for example.

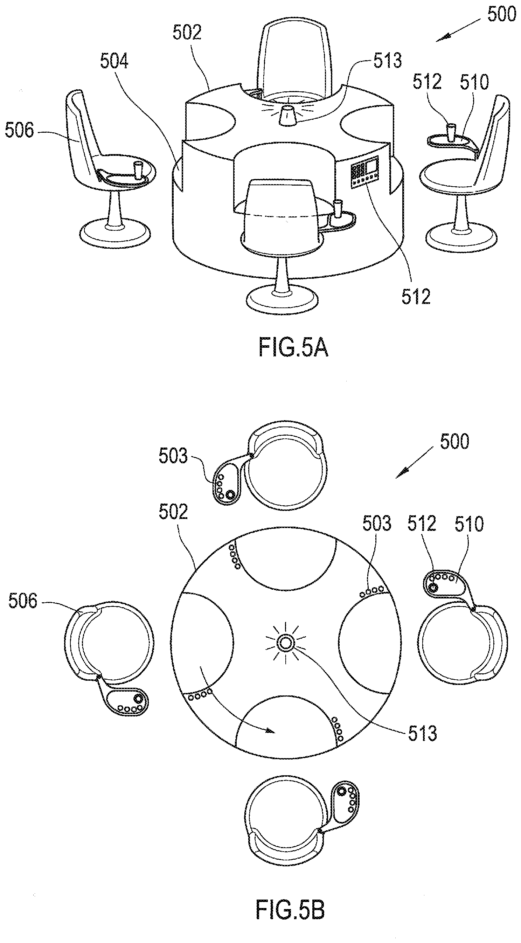

Referring to **FIGs. 5A** and **5B****,** an alternate embodiment 500 of the invention includes a central portion 502 which may be translated to relocate a person disposed thereon in a seat 504 for example, to another person in a seat 506 at a fixed location. Ideally a counter surface 510 is provided to dispose drinks 512 and the like.

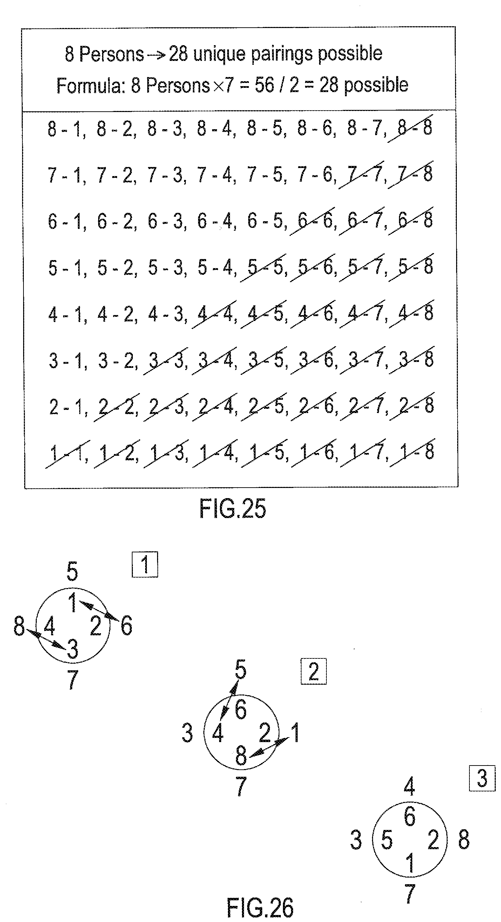

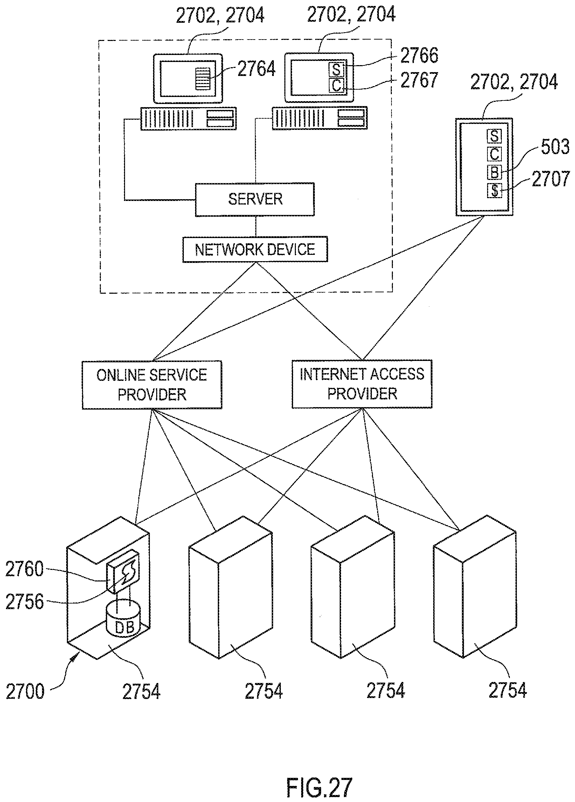

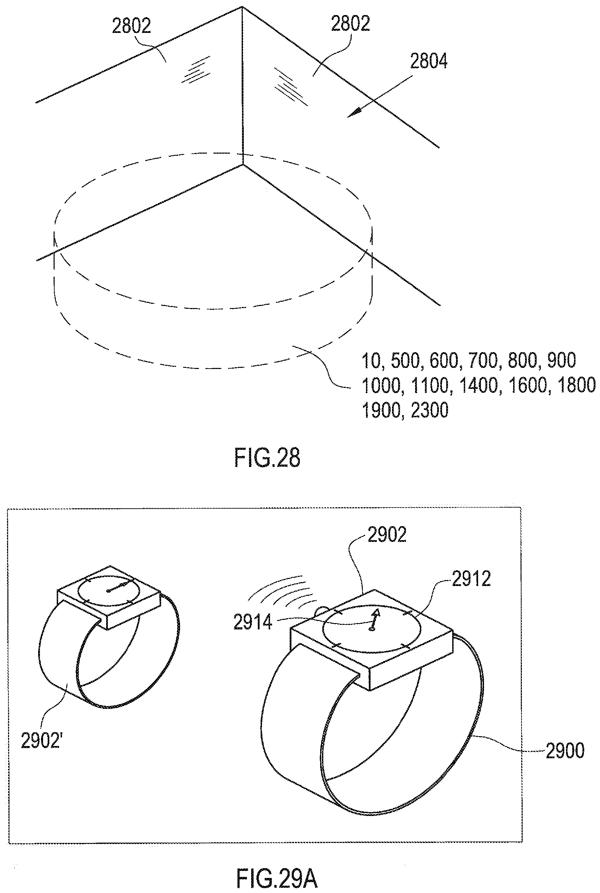

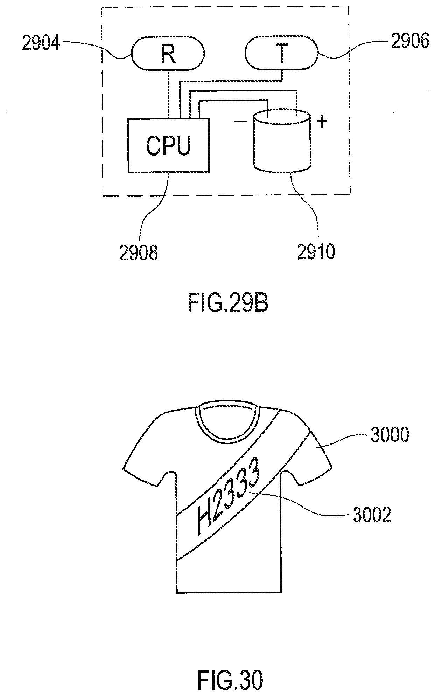

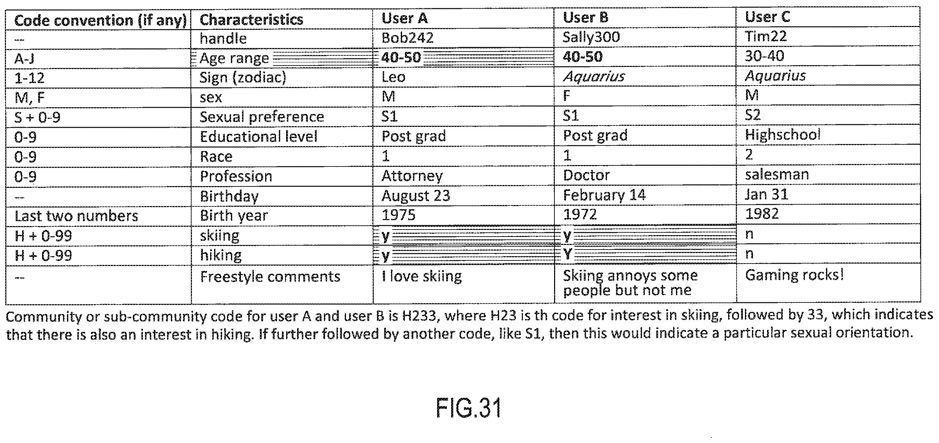

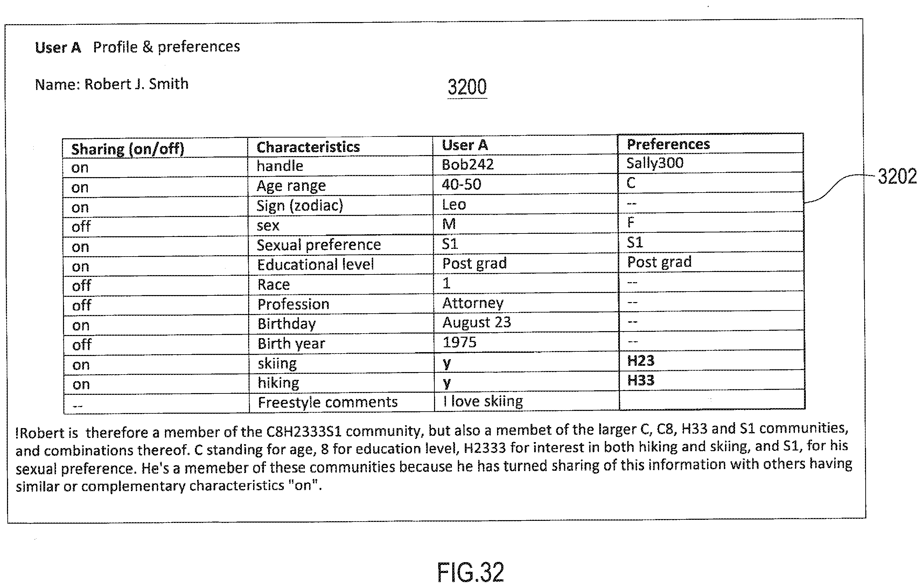

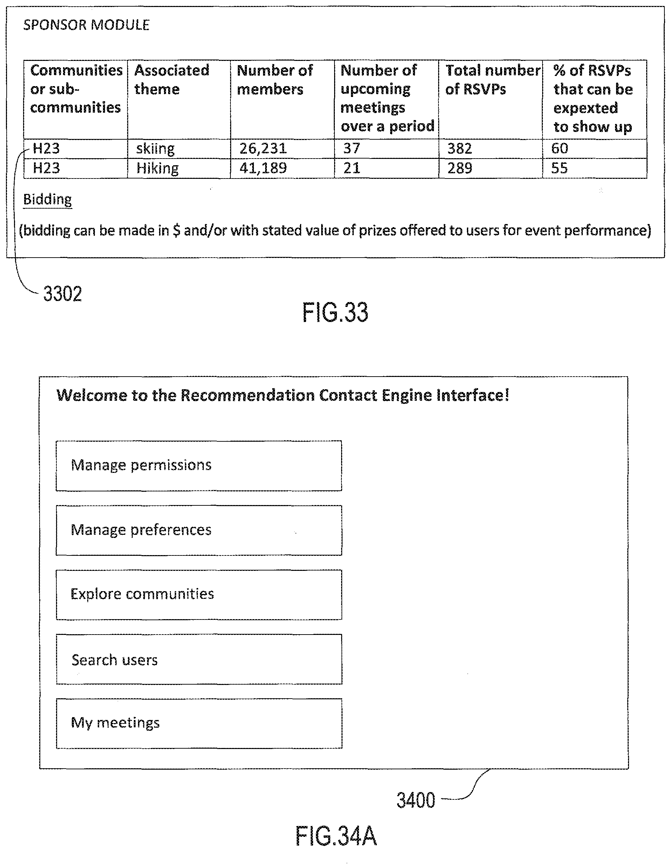

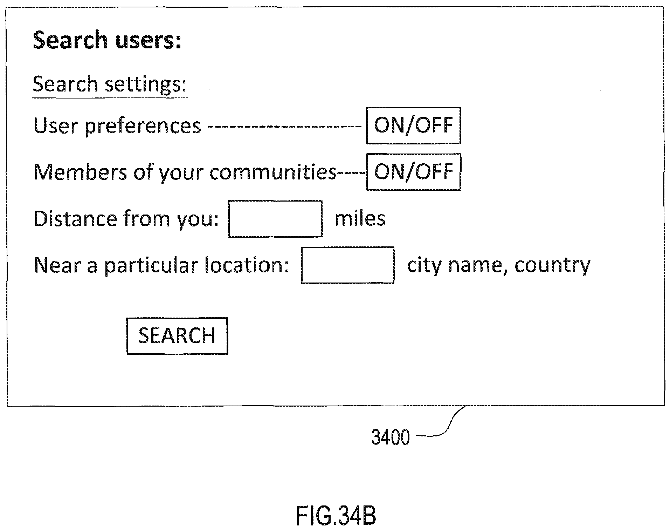

It should be noted that the total number of all possible unique pairings with 8 persons is the number of persons times the number of persons minus one (8 persons are able to make 7 contacts, without changing seats), such an arrangement is capable of creating 8 x 7, or 56, x ½ 56 or 28 total possible new pairings. See **FIG. 25** for a graphical illustration of the foregoing. A 4 x 4 array of the invention described in **FIGS. 5A** and **5B** can make 16 (i.e., 4x4) unique pairings without changing seats. All possible pairings (all 28 possible) can be achieved by allowing alternating persons on the outer ring to change seats with alternating persons on the inner rotating ring, twice, alternating different persons between the second and third configuration. This results in a total of 16 x 3 pairings (48 total pairings) where many are redundant (namely 48 total pairings minus 28 total possible unique pairings, leaving 20 redundant pairings). Of course, it is not undesirable to have redundant pairings, but it is reasonable to measure the pairing efficiency of the device arrangement by looking at the number of unique pairings capable without changing seats and comparing this with the total number of all possible pairings. Consequently, in this example, the efficiency would be 16/28 for one configuration without seat exchanges, or about 58%, which represents a baseline efficiency. With two more rounds (one possible configuration being shown in **FIG. 26**) in which seats are changed, all possible 28 unique pairings or matches are accomplished, but with the sacrifice that a number of redundant pairings (namely 12) are also made. Note that 100% efficiency is not desired in all cases, particularly when men wish only to meet women and vice versa. Consequently, a console adjacent each seat can instruct the users to change seats to suit the goals of the engagement, between operation intervals (when the device is not moving) from one marked seat to another by providing an audible or visual suggestion via a speaker or a display, in order to achieve the total number of possible unique pairings. The seat switching can be optimized mathematically, heuristically or experimentally, in an effort to increase pairing efficiency and/or to minimize the number of seat changes required.

Further unique pairings are possible in an embodiment where the outer and/or inner seats are able to be automatically (or manually) turned to face adjacently seated individuals, those who would otherwise not meet each other. This capacity can be built into the versions of the invention discussed herein, which have a rotating platform, by allowing the seating on the platform to turn on their own axis, and via a drive shaft that extends from a base of the rotating platform outwardly to the fixed seats, thereby enabling turning of these outer seats toward each other on command of the controller.

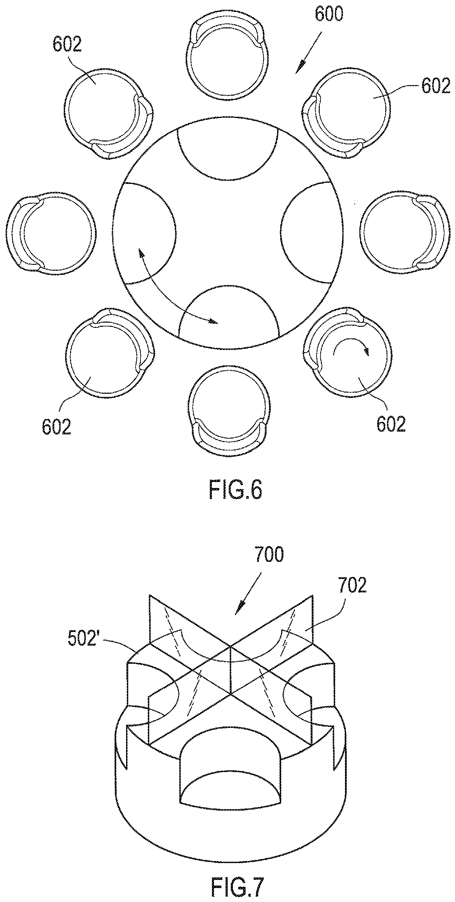

Referring now to **FIG. 6****,** a variation 600 of the alternate embodiment of **FIG. 5A****,** in which more fixed seating 602 is provided. Here the number of unique pairings is 8 x 4, or 32. Further, this embodiment shows outer seats turning outwardly during pause intervals, which occur when the outside number of seats is greater than the inside number of seats. Alternatively, the system of **FIG. 6** can create three person discussion circles, thereby giving those who sit adjacent each other on the outer ring an opportunity to meet, perhaps facilitated by the person on a centrally rotating seat. In such an embodiment, privacy baffles may be used to demarcate the three person discussion groups and not just persons seated opposite one another. In such a situation, it may be advisable to have the baffles foldable (preferably at their extremities), either automatically, or manually, to improve the demarcation of the three way conversation or to at least partially remove the barrier effect.

Note as well that a user can choose a seat based on their own personality or energy level. An outgoing, energetic user would likely prefer a seat in the middle rotating portion because he is potentially placed in continual contact with others. A more reserved or less energetic user would choose an exterior fixed seat, because there is a pause between contacts. A user may also choose the outside seat because he has a problem with motion sickness. Users can also choose to avoid other users by re-seating themselves on the same relative side of the system (either the rotating side or the fixed side).

Referring now to **FIG. 7****,** in another variation 700, the central translation device 502' may have privacy baffles 702.

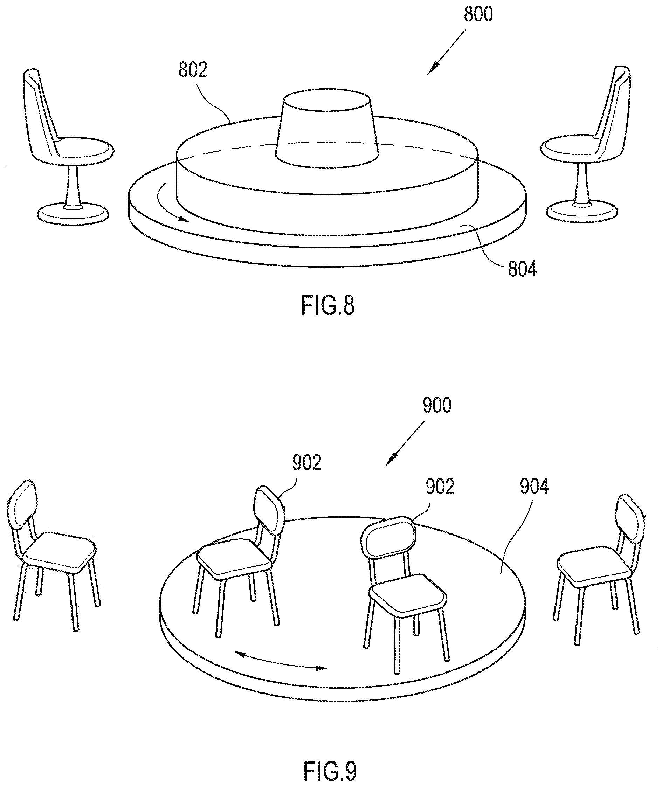

Referring now to **FIG. 8****,** a simple embodiment 800 of the invention includes a couch 802, such as a settee couch, disposed on the translating platform 804.

Referring now to **FIG. 9****,** in an even simpler embodiment 900, mobile seating 902 is disposed on the translating platform 904.

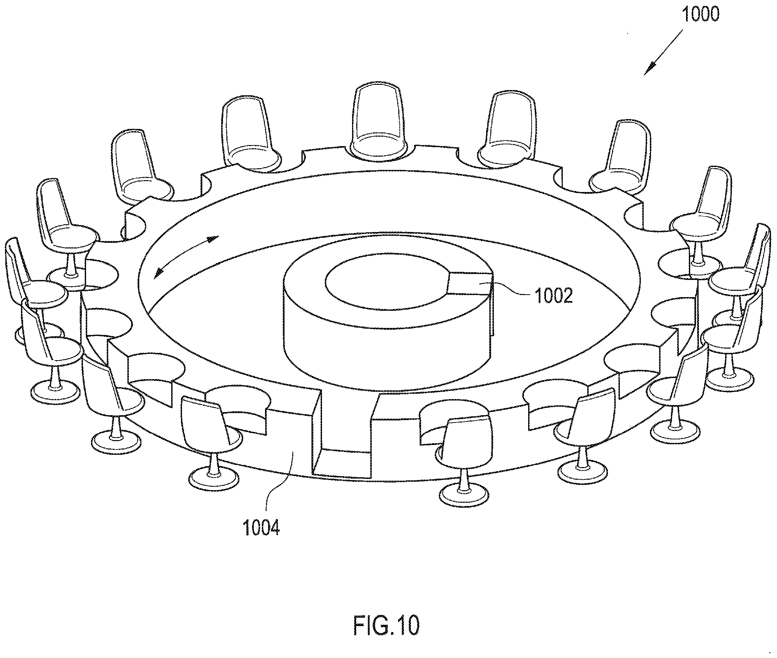

Referring now to **FIG. 10****,** a large ring shaped arrangement 1000 of the invention has a central bar or a conductor seating arrangement 1002 within the translatable disposition device 1004 of the invention.

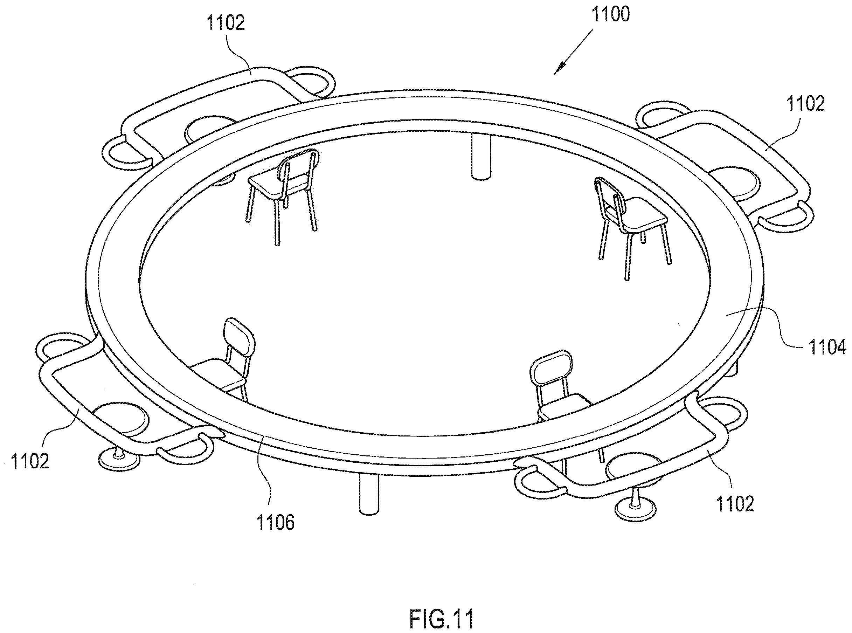

Referring now to **FIG. 11** is a perspective view of an arrangement 1100 of the invention in which no seating need be translated, but rather, a guiding hoop 1102 guides persons to move from one place to another on foot. The hoops 1102 are guided to rotate around the table 1104 on a chain 1106 or, when the table is round, on a ring fitted with bearings (not shown), for example, to ensure smooth operation. This embodiment 1100 is advantageous in that the masses of individuals need not be translated, thereby avoiding complicated and heavy designs. This solution is simpler because the table 1104 is fixed. In one variation, when the hoop is touched, an alarm may go off until the person moves away from the hoop, which means until the person allows himself to be guided to the next position to make a match. Alternatively, proximity sensors or capacitance sensors detect touch or proximity to sound an alarm to encourage the person to comply with the need to relocate himself. At the same time however, this embodiment suffers from the disadvantage that some users may be put off by being "corralled" and "forced" to move, something that the other embodiments of the invention avoid.

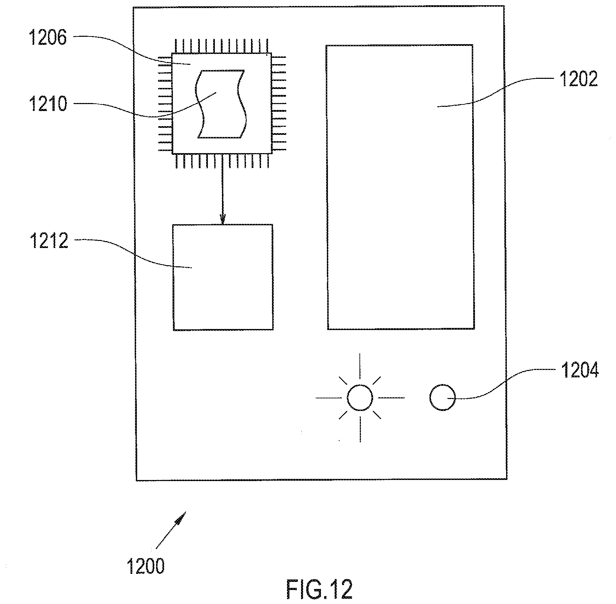

Referring now to **FIG. 12****,** a controller 512 controls the translation of individuals disposed on the system of the invention. The controller 512 comprises a processor and a nontransitory computer readable storage medium programmed with application software executing method steps described herein. In a first step, according to optional inputs from users or the purveyors of the system, the processor interrogates each presence sensor (using optics, lasers, capacitive contact sensors, resistance sensors, proximity sensors or strain gauge/weight sensors) embedded in each seat, which causes a presence or non-presence signal to be sent by each seat together with a unique seat identifier, in order to enable the processor to determine which seats are occupied. In a second step, the processor takes the information received from the seats and feeds this information into an algorithm adapted to direct movement of the seats such that face to face contact is made between those detected to be present. In a third step, the processor controls the motor(s) driving the seats according to outputs of the algorithm in order to share the time between the persons seated, preferably in an egalitarian manner. The optional inputs mentioned above may be the time duration of face-to-face contact that is desired, and the selection of the algorithm desires, such as a dating algorithm, a networking algorithm or other algorithm style. For example, if a dating algorithm is selected, then the system may optionally take inputs from each person seated, such as the sex and sexual preference of that person, and use that input to make the appropriate face to face contacts. In a more passive variant, the system may use proximity sensors which detect the proximity of the legs of those seated to the arm rests in order to guess whether the person seated is male or female (the greater the proximity of the legs to the armrests, the more likely that person is male, and the more distant the legs from the armrests, the more likely that person seated is female).

The controller 512 further includes an interface 1202 such as a touch screen, a keyboard of input buttons, facilitating the activation of the controller and the selection of the operation mode of the controller. Circuitry (not shown) conducts the flow of electricity to a motor to activate the same or to change polarity to reverse the same. In addition, the circuitry controls the acceleration of the device, such that the movement is smooth and almost unnoticeable. Sensors provide inputs that the controller uses to optimize the user experience. Colored light indicators 1204 communicate with the user. A processor 1206 runs software code 1210 to open and close switches 1212 to provide more or less power or change current flow direction, to enable control of the invention in a desired manner. An input panel may be provided adjacent to each seat, but for simplicity, the same may be provided only to seats that are translated. In a simpler embodiment, the panel may be a physical panel or marker board, where the individuals or users write their names and some characteristics about themselves and turn the panel so as to be read by the opposing individual with whom they are engaging, thus avoiding complicated electronics or a connection to the Internet.

In sum, the disposition system of the invention includes disposition devices such as seating or standing supports and/or counter/table arrangements adapted to dispose at least two persons in which a guiding system guides relative movement of at least one person of the at least two persons to place the at least one person so as to successively face one of the at least one remaining persons for a desired time period.

The guiding system is activated by a motor, by a gear motor and rack and pinion gear arrangement, or by hand, such as by rotating a wheel or by a push or pull handle.

In one embodiment, such as that of **FIG. 3****,** the guiding system is optionally a conveyor arrangement. The conveyor arrangement is a closed loop. The closed loop may be of any serpentine form.

Referring in addition to **FIG. 5A****,** in another embodiment, the guiding system has at least one rotating table. The rotating table may be formed as a ring as depicted in **FIGs. 1A****,** 1B, and **8****.** Referring now to **FIG. 5A, 5B****,** **6, 7****,** **8,** and **9****,** in a simple form, the disposition system is a round couch disposed on a rotating platform. Referring to **FIG. 10****,** in its simplest form, the couch is replaced by chairs disposed on the rotating platform.

The desired time period to be matched is typically a set time period. At the end of said set time period, translation or relative motion is initiated to place persons in another facing relationship.

A computer processor initiates relative motion to place persons in the facing relationship.

One can imagine that such a device might be disposed at a bar at a conference hotel. An advantage of the invention is that no registration or software downloads are necessary to participate in use of the device. For example, a busy executive travels to a conference hotel at which one such device is used. The executive sits on a seat of the system of the device. When only one person is seated, nothing need happen - no movement or coordination of motion of each seat. However, the device is programmed to sense the position of each person seated on the device. When one person is seated on the outer ring of seating, and one on the rotating couch, then rotation is initiated to place the persons seated in face to face contact. Where three persons are seated, two on the outside ring and one on the rotating platform, then the person on the rotating ring is place in face to face contact with the persons on the outer ring. Depending on how many persons are seated on the device, the system of the device calculates a fair division of time among the participants so as to fairly distribute the time spent between them. When the system seating is full, then of course, the system divides the time evenly between the persons seated on the rotating platform and the outer ring.

A refreshment or food conveyor system conveys refreshments or food to persons disposed on the disposition system. Sensors in the conveyor system register the lifting of drinks or food taken from the conveyor system for billing purposes. It is assumed that taken drinks or food were taken by the person proximate the drink or food location for billing purposes.

In other words, the invention is a disposition system including a central translatable disposition device comprising at least one seat or standing support and/or counter/table arrangement. The disposition device is adapted to transport an individual person disposed on the at least one seat or standing support and/or counter/table arrangement to face one other or preferably one of at least two fixed seats or standing supports and/or counter/table arrangements for a time period. After this time period, the system translates the at least one seat or standing support and/or counter/table arrangement to face another of the seats or standing supports and/or counter/table arrangements for another time period.

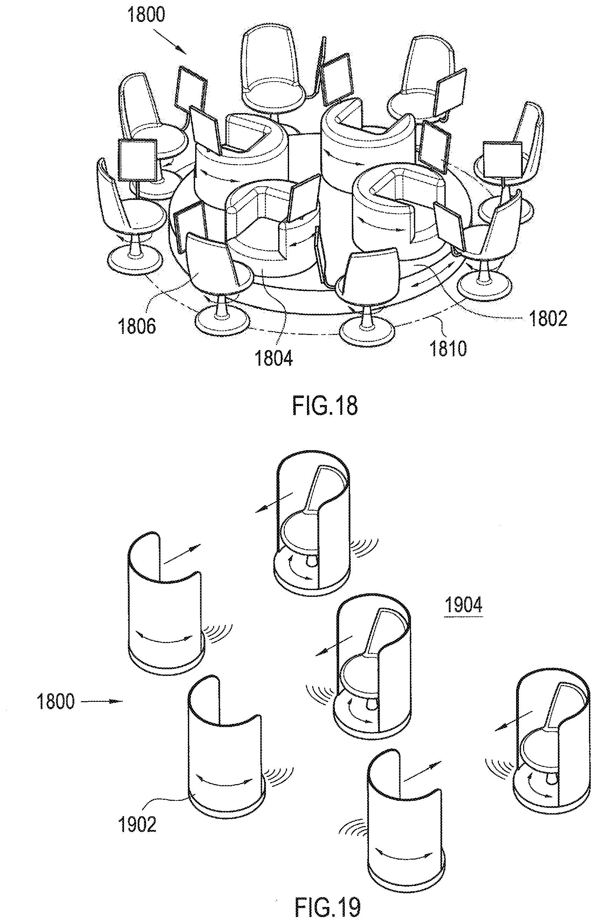

Although it may be controlled by hand, transport of an individual is optimally controlled by a controller. The controller reads inputs of presence, strain gauges, and/or weight sensors associated with the at least one seat(s) or standing support(s) and/or counter/table arrangement(s) to ensure that individuals disposed on the fixed and translatable seat(s) or standing support(s) and/or counter/table arrangement(s) are matched with each other for a time period. A console having a touch screen or other input device optionally disposed on the disposition system can display or even locally audibly broadcast, via a speaker, characteristics of two participants that match based on some input criteria (for example, indicating "you both like sushi", or "you are both attorneys", or "you are both Texas Aggies") as well as enable a participant to choose to command the controller to solicit or to avoid further contact with the person with whom they have been matched (on the basis of such sensed presence, strain or weight), such command continuing until the presence detector detects that at least one of the persons involved has lifted off the seat or standing support (and, based on comparable strain/weight, surmise that they have simply changed seats). Avoidance may be accomplished by switching seats to one which makes a repeated match impossible (from a rotating seat to a fixed seat, for example), or by simply allowing the seat of a person who wishes to avoid someone to be rotated away from that person prior to a match being made (this is shown in particular in **FIG. 18****,** where the inner or central seats can rotate away from the facing person). Rematching of two individuals or users may also be contingent on both individuals or users indicating that they are willing to be matched again with the other individual or user, or by omission, where no objection is made by the individuals or users, a second or further match is made possible.

Privacy baffles separating seats or standing supports from adjacent ones minimize distractions and so focus the attention of matched individuals.

In another aspect of the invention, a controller controls the transport of individuals to establish alternating facing relationships for a time period. The controller is fed with detected inputs indicating the presence of individuals/users disposed on fixed and translatable seat(s) or standing support(s) and/or counter/table arrangement(s), to match those individuals detected to at least another individual in a prescribed way.

The controller may make random or consecutive matches, or matches based on match criteria according to programmed inputs.

The matches may be made to match men to women or vice versa, to match employers to candidate employees or head hunters and vice versa, to match investors to entrepreneurs and vice versa, to match students and teachers for testing purposes, such as oral examinations, thereby enabling review of student's oral knowledge by one or more teachers and enabling a grading system in which each teacher can register a grade for the performance of each student. The matches may be made between managers of companies considering merger, to facilitate understanding of the needs and wishes of the managers. The matches may be made simply as introductions successively, which would facilitate persons attending a family reunion or wedding in getting to know one another. The matches may even be made between members of hostile groups of individuals under controlled conditions to facilitate communication and understanding with a view to resolving disputes. It is easy to imagine the social benefits of bringing hostile groups together face to face (i.e., in promoting peace) while being able to emphasize (via a visual and/or audible prompt) all the things/characteristics/interests the individuals have in common, enhanced by the power of the computer in making comparisons based on the profile inputs of the individuals, at least those for which the individuals have allowed comparisons.

In a further embodiment, the app or app and device combination of the invention includes a feature allowing each participant to select their language and to activate voice recognized translation to the language selected by the other participant, thereby allowing for voice recognition and simultaneous translation of the conversation between participants by displaying to the listener on a display in text or computer generated speech a translation of the speaker into a language comprehensible to the listener. For example, using the networking roundtable of the invention, each participant is shown the common interests in their own language, and is given the option of voice recognized translation of live questions to the other participant in their language. The app then should of course, compare profile information originally saved in different languages. This step involves language translation and comparison to at least one language, which is typically the language of one of the users, or a common language like English. The comparison and indication of common interests in a language understood by the user, as well as the opportunity to respond or engage in conversation using one's own language helps develop understanding between citizens of different nations and cultures. Such embodiment is particularly useful for business man travelling in foreign lands which use other languages because not only is the discussion translated into the relevant language, but the common interests are recognized and displayed, prompting further discussion.

Input means such as a selection push button allows persons who dispose themselves on the device to be matched to input at least one of a group of characteristics consisting of gender, age, sexual orientation, profession, employment status, interests, and purpose in being matched. The characteristics input may be of the disposed persons and/or of those with whom they would prefer to be matched.

The controller may be programmed to operate to effect a match only when persons on the translatable or the fixed side are detected, because no matches are possible. Where no match is possible, the controller may optionally initiate a waiting routine, which optionally slowly translates a translatable seat(s) or standing support(s) and/or counter/table arrangement(s). Or it may audibly signal one or the other occupant to change their seat such that a match is possible.

In one variation, when presence detection indicates a match can be made, such as at least one individual disposed on a fixed seat(s) or standing support(s) and/or counter/table arrangement(s), and at least one on a translatable seat(s) or standing support(s) and/or counter/table arrangement(s), the controller initiates translation to make the match.

A warning light, such as a red light, indicates when it is not safe to take a seat or dispose an individual on the translatable seat(s) or standing support(s) and/or counter/table arrangement(s). This warning, when made shortly before the translation of the device, is also an indication that it is time to break off the conversation. Another colored light may also provide this warning, or a message on a console disposed next to the seated individual may provide this indication as well.

The time period is preferably counted down on a display visible to the individuals, to allow for last minute exchange of contact details, and to properly say goodbye.

The controller optionally receives inputs from the individuals indicating a desire to be matched again, or not, with another individual, at least for the duration of the detected presence of the another individual. When presence is detected and seating may be suggested via, for example, a light or sound indication, in order to achieve an even distribution of weight on the translatable seat(s) or standing support(s) and/or counter/table arrangement(s) to optimize the matches to be created according to a set criteria. Depending on the number of input individuals and their interests, seating locations may be suggested by lighting such as coded colored lighting.

The controller assumes that a desired individual is still present when their non-presence has not be registered, such non-presence being registered by the presence indicator indicating an interruption in presence such as the desired individual lifting out of their seat.

A payment system is provided for taking payment from persons which wish to be disposed on the system, who wish to remain on the system for a longer term, or who which to be matched in a desired way. The payment device may allow persons to pay to make another match with a desired individual.

In another aspect of the invention, a novel café, bar, restaurant or conference center has at least one disposition device as described above, in which each device is themed as selected from a group of themes consisting of dating, friendship, business contacts, networking, employment, over 30 dating, over 40 dating, under 30 dating, and under 40 dating.

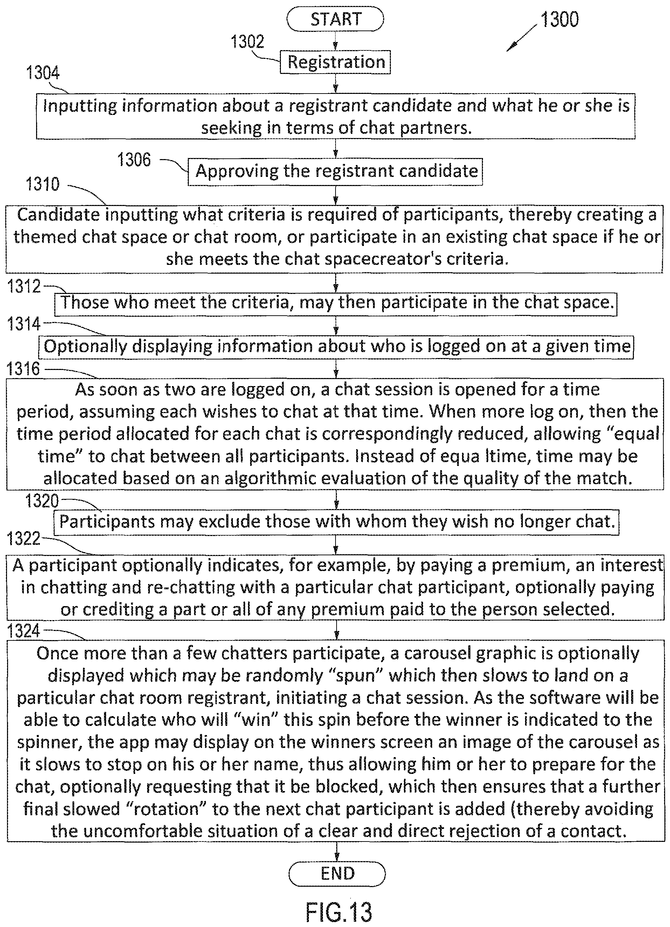

Referring now to **FIG. 13****,** in still another aspect, the invention may be implemented fully or partially in software, via a smart phone app. In such an embodiment, a registration step would register those interested in chatting with each other. The registration step includes inputting information about a registrant candidate and what he or she is seeking in terms of chat partners, professional service providers, mates, or friends. The registrant candidate is then approved, if he or she meets the general registration criteria. As a registrant, the registrant may then create a chat theme, inputting what criteria is required of participants, thereby creating a themed chat space or chat room, or participate in an existing chat space if he or she meets the chat space creator's criteria. Consequently, only those registrants with suitable characteristics may participate in the themed chat room. The chat space is then available for those of common interest, facilitating the creation of a community. Those who meet the criteria may then participate in the chat space. The app then knows and displays information about who is logged on at a given time. As soon as two are logged on, a chat session is opened for a time period, assuming each wishes to chat at that time. When more log on, then the time period allocated for each chat is correspondingly reduced, allowing "equal time" to chat between all participants. Instead of equal time, time may be allocated based an evaluation of the quality of the match.

The app mimics the invention in the virtual world. As with the physical invention (which selection may indeed affect the reality by excluding a match on the physical carousel), the participants may exclude those with whom they wish no longer chat (by for example, registering the weight sensed (via for example a strain gauge) of the excluded person and excluding that person from further contact at least for a prescribed time period, or excluding them based on a registered member number), and the system then seeks other matches, dividing the time between those non-excluded chatters. A participant may indicate, for example, by paying a premium, an interest in chatting and re-chatting with a particular chat participant. Any premium paid may be partially or fully credited to the person selected. In this manner, those with whom chatting is desirous can build a following and thereby earn credits which may be "cashed in" (for money, points, gifts, coupons, or vouchers) at a desired point in the future. Once more than a few chatters participate, a carousel graphic may be displayed which may be randomly "spun" which then slows to land on a particular chat room registrant, initiating a chat session. Using the inputs of momentum and speed, the software calculates in advance of the actual final stopping point, i.e., who will be selected by this spin. The app may then display on the spinner's screen an image of the carousel as it slows to stop on the final selection's name or picture, thus allowing him or her to prepare for the chat, optionally requesting that it be blocked, which then ensures that a further final slowed "rotation" to the next chat participant is added to move the next person.

In fact, the app may mimic via a graphic display on the disposition device, the actual translating disposition device indicating summary information to each participant about who is present on the disposition device. Payments requesting matches or the indication of preferences then may also be or alternatively be considered to bring persons on the disposition device together. In a variation, the system may perform a "roulette" match, in which the carousel is spun and the match is made randomly. Consequently, the associated app includes corresponding steps which randomly match but which avoids being rematched to someone with whom the user has already been matched.

In an alternate embodiment implemented in software, and also not requiring the physical networking roundtable of the invention, this alternate app nevertheless requires face to face contact and at the same time, forces a time limit between users to ensure that each participant has an equal opportunity to chat, face-to-face, with other members. In this embodiment, in a first step, the system confirms the presence of all participants through a physically present registration step. In this step, id is verified such as via a finger id scanner which scans and reads all participants on a host touch screen device, such as a smart phone. Alternatively, and preferably, instead of the scanning of a finger print, each event creates a unique event code for each participant and provides that code only to each participant. Consequently, roll call is made by a host inputting each unique code into his host computing device. The system then knows who is present. The system then starts the process of matching pairs of participants or any group composition which the host requires. The matchings are made, and the participants in these smaller match groups are given a certain length of time to interact with each other. The system generates codes or other inputs sent to one of the members, and requires that the other members input that code or other input in order to continue the networking session. This ensures that the groups are actually engaging with each other and not simply taking more time with the prior matched person. An alarm may be generated where the cross inputs are not input correctly, indicating a violation of the order of the networking session. Where there is a violation, the system may exclude these violators from the current round of networking, allowing those who are interacting properly to continue. Violators who routinely violate the rules may also be excluded from continued membership in a community or a group. In this manner, systematic and orderly connection with others is a criteria which can be used to determine a "winner" of the matching round. The winner could receive a free drink, or a promotional item from a sponsor, for example. Of course, voice recognized translations may be made as discussed herein, to facilitate communication between those who speak different languages.

In any configuration, a user may signal, via an indicator on the console of the device, that the conversation will be recorded, giving the other party a means to provide his approval, and providing the option to transmit contact information. By selecting the recordation option, a user has the opportunity to memorialize the contact for reference (for sentimental, recollection or evidentiary purposes), and to dissuade anyone who might be verbally abusive, possessive or forward from continuing contact with the user. When the system is on a "record conversation" mode, the other party is asked to confirm their agreement to the recording, via the recording of a verbal OK or by indicating the same on an input device (e.g., touch screen) on their console next to their seat or on the computer (e.g., smartphone) by which they are connected to the system.

Optionally, participants may be provided with a user ID after an online or local registration step, in which characteristics of the participant and of any desired contacts are registered. The system may, via the touch screen, then indicate to a user who has properly disposed themselves on the system what the characteristics are of those others who have also properly disposed themselves on the system, optionally displaying common or sought out characteristics to the user, together with the name and other biographic information as memory aids during the conversation.

In one embodiment, disposition devices may have a display which indicates the type of person which is expected to dispose themselves on a disposition device, such as investor, entrepreneur, girl or boy, employer or candidate employee, tour agent and potential tour customer, etc. The invention may ideally be configured to allow wine producers to engage with potential consumers of their products in a wine tasting round, for example.

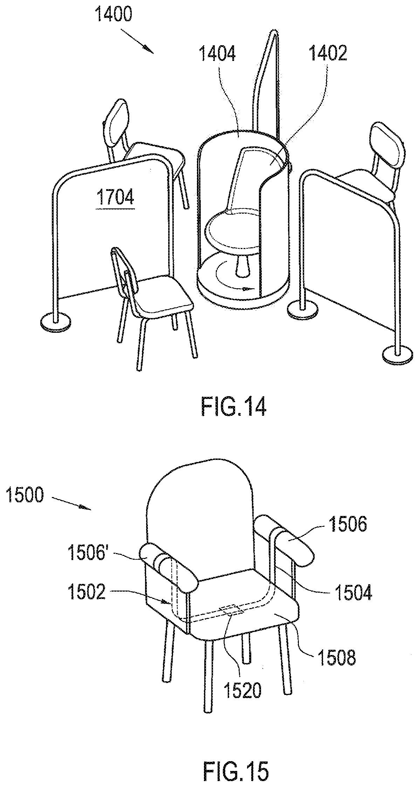

Referring now to **FIG. 14****,** the simplest possible variant 1400 of the invention includes a single central seat 1402, preferably with privacy baffles 1404, which seat is turned successively or according to commands of the controller, to face other persons in fixed disposition devices. Suitable 3-D baffles are Soundwave^{®} Village by OFFECCT, Inc. of Tibro, Sweden, although 2-D baffles may be used. Other suitable products are described on the World Wide Web, bueroteam-hamburg.de/trennwand-akustiksysteme. A visual or audible message may then be emitted by the system, such as the command "Say hello".

Of course, an embodiment of the invention could comprise more than one moving disposition device, such as adjacent moving devices which move as a gear engaged with a corresponding gear of a gear train, concentric or one next to another, in any arrangement which circular gears are known in the art of transmission drives may take. Alternatively, in another embodiment, each disposition device may have independent motive power and so be adapted to independently find another disposition device in which is disposed a participant that is a potential match for the user.

Referring now to **FIG. 15****,** in a weight sensing embodiment 1500, a weight or strain sensor arrangement 1502 is used in the instant invention. In this embodiment, a cord 1504 extends from an armrest 1506, then below the seat 1508 to an opposing armrest 1506'. The weight or strain is sensed by a scale or stain gauge 1520 attached to the cord 1504 and sends the sensed weight or strain to the controller, thereby providing inputs useful to estimate whether someone is in the seat or not. Such arrangement is preferably embedded in upholstery so that it is not visible. It may also be disposed under the seat. The controller may be calibrated to sense an amount of weight comparable to that of a person, to avoid false indications such as the presence of a coat or some other item. A mere presence indicator, such as a laser beam (for example, wherein the laser emitter is mounted on one arm rest and directed to a sensor on the other arm rest) broken by an obstacle which is the person occupying a disposition device in the system, may also be used, which indicator however cannot sense weight (unless located under the seat and calibrated so that it is broken only after the seat moves downward under the weight of the occupant to block the laser beam). Weight further indicates gender, and so can be used for the system to "guess" whether the person seated is a man or a woman. Proximity sensors below each armrest may also be used to sense the proximity of the thighs of the individuals, even the movement of the thighs over time, and compare that profile with typical profiles for men and for women, optionally using Al technology or deep learning methods, thereby allowing more accurate estimation of whether the person seated is male or female. Of course, a simple indicator or switch may be thrown by the person seated indicating whether they are male or female, this input, or the estimation from the weight measurement or proximity input of the thighs, being available for use by the control algorithm for matching persons who take a seat on the system of the invention. Facial recognition software may also be used to estimate the sex of the participant.

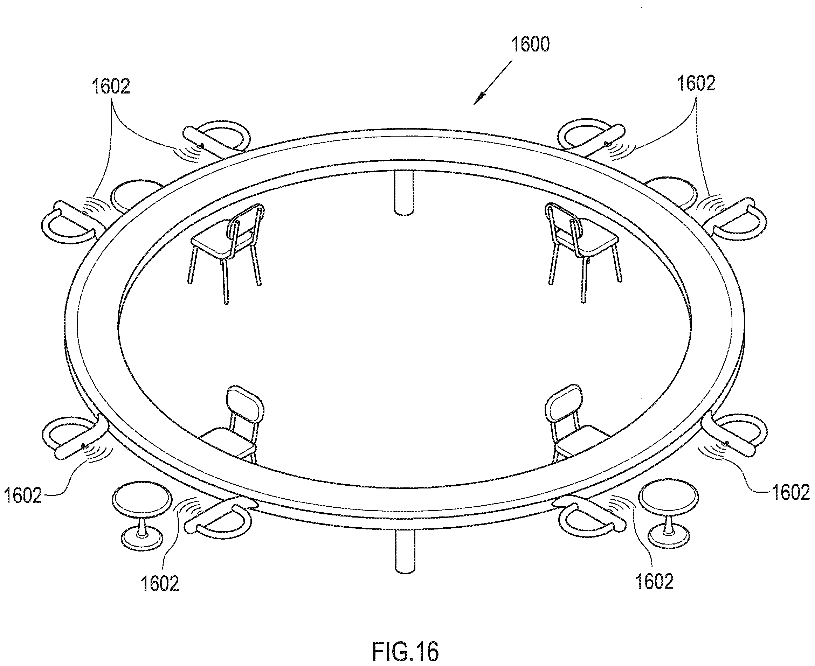

Referring now to FIG. 16, another embodiment 1600 of the invention is similar to that already disclosed in association with FIG. 11, but using a wireless proximity sensor 1602 mounted on a mobile or base location (in this example, on the mobile location) to sense proximity between a fixed person and the mobile unit in order to sound an alarm when the distance between the same exceeds a certain distance, encouraging participants to respect their rendezvous while not physically moving any participants.

Referring now to FIG. 18, another embodiment 1800 includes a rotating platform 1802 on which central, rotatable seats 1804 are located. The rotation of the seats 1804 located on the rotating platform 1802 can be automated (via a controller controlling a motor built into the seat or in the rotating platform itself) and synchronized with the movement of other seats to permit those participants sitting in seats 1804 located in on the platform 1802 to meet others to their right or left. In any case, if a person located on the rotating platform 1802 wishes not to face a person sitting on a seat 1806 of the outer ring 1810 of seats, he can manually (or by activating the seat to turn via a motor) cause his seat 1804 to rotate away from that person for the duration of the time that the seats would otherwise be face to face.

Referring now to **FIG. 19****,** in a simpler embodiment, the system 1900 is made up of rotating seats 1902 laid out in an array of seats (here, 6 are shown but there is no limit to the number of seats) on a floor 1904. Such seats 1902 preferably include a wireless communication device 1906 such as Bluetooth which allows communication and thereby coordination of rotation between the seats so as to match persons face to face. Other means, such as proximity sensors, laser optical communication, laser light pulses, or cable or mechanical connection under the floor may be suitable substitutes to the wireless Bluetooth connection. The communication between seats 1902 should include a seat identifier, which uniquely locates the seat in a seat map of the array. It typically would need to communicate the relative rotational position of the seats as well. Then, as the system knows where the seats are and what seats are adjacent them, a controller controls the rotational orientation of each seat to, to the extent possible, place the person seated in each seat in a position facing another person seated in an adjacent seat. After a set amount of time, the controller rotates the seats to change the face to face relationship to allow each person seated to face and to engage in conversation with another person. As the occupancy of each seat is sensed, the face to face relationships are made between those persons in occupied seats, as it makes no sense to place someone in contact with an empty seat. The seats 1902 sense when someone leaves the seat 1902, and when another, having a characteristic (weight, or ID) that differs from the prior occupant of the seat takes the seat so as to allow another match to an adjacent seat. In this embodiment 1900, the floor 1904 is typically custom made to allow for power to each chair 1902. The floor 1904 may of course have channels for wiring which transmits control signals to each chair 1902 to orchestrate the movement of the chairs to maximize contacts, to accommodate audio headsets, and, where a user requests that a contact not be repeated, to prevent a later match (until the seating senses that one or both individuals have left their seat). The floor may be transparent or translucent, multi-colored, backlit, and or decorated with colored LED lighting integrated in the floor.

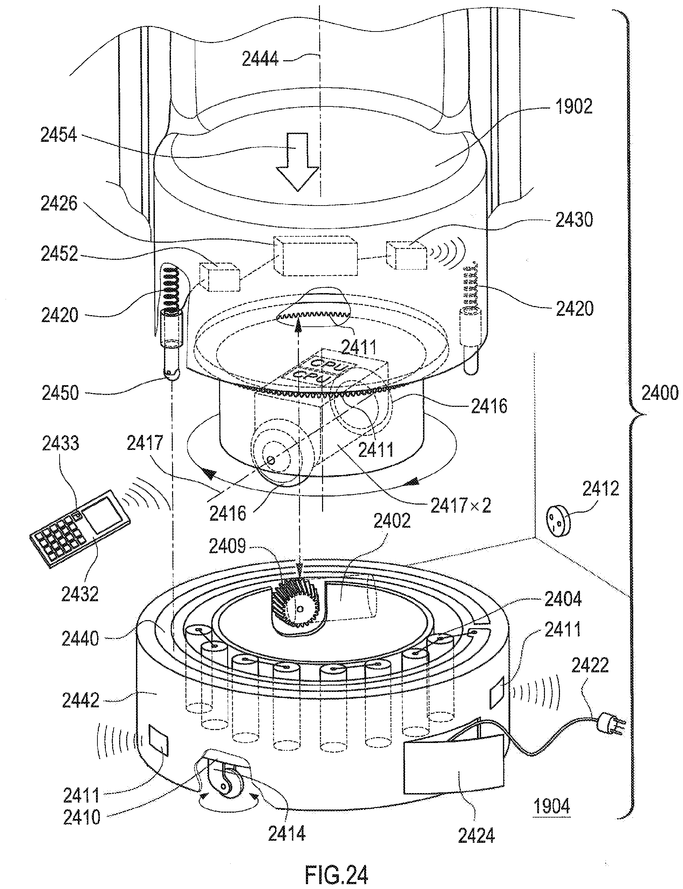

Referring now to **FIG. 24****,** the seat 1902, dubbed a networking assistant or intelligent seat 2400, may include a motor 2402 that is powered preferably by a battery 2404. Thus, the hollow floor having channels can be avoided as no hardwired connections are required. For charging, and to facilitate manual movement (rotation, repositioning or a combination thereof), although motorized translation along the floor 1904 is possible, the device may also simply be set via a disengagement mechanism (that may lock swivels 2410) to neutral (or disengage from the motor 2402, for example by springs disengaging the device when the weight of an occupant is removed), in which state the device can be easily pushed or pulled toward a wall having an electrical outlet 2412. In one embodiment, this involves three or more swivelling wheels or casters 2414 which support the weight of the device such that that drive wheels or rollers do not touch the floor and are therefore not engaged when the seat is not occupied. However, when the weight of a person is added, springs 2420 are contracted and drive wheels 2416 extend downward relative to these support casters 2414, against the floor 1904 and so now are able to drive the device via frictional interaction with the floor. The drive wheels 2416 themselves may be controlled or steered with the result being that when such a disengagement mechanism is used, another motion other than simple rotational motion may be imparted (in fact, two parallel wheels 2416 driven at differing rotational velocities provide for steering and translation of the device with the platform 2442 is free to roll in any direction on swivels 2414. As with the conveyer system mentioned earlier **(****FIG. 3****),** the seat 1902 may then be controlled to be driven along a path, any path permitted by the support structure or floor 1904 for that matter. A charging cable 2422, preferably stored in a compartment 2424 in the device, preferably retractable, may then be extended a short distance and plugged into the electrical outlet 2412 for charging. A controller 2426 has wireless communication device 2430 capable of communicating with each seat 1902 and operating a remote controller 2432. Where the seat 1902 is fully automated, including being adapted to receive information useful for making matches via a smart card or via access to online profiles of participant, it serves as a moderator or a sort of "mutual friend" that knows the other participants and can move the device 1902 to a juxtaposed position to another seat supporting a participant of likely interest. Note of course that the matches made now need not be made between adjacent seats, but rather between seated participants whose profiles are likely to generate a particular match, preferably using AI technology to determine the most efficient matches. This allows the system to make the most likely successful contacts in the least amount of time. Note that although gear 2409, the motor 2402, and rack 2411 are shown in the figure, they are not strictly required with the wheels 2416 are independently driven by another motor (not shown), as rotation in opposite directions of these wheels will cause rotation of the chair. Rotation of these wheels 2416 in the same direction will cause translation of the chair. Indeed a simpler device will not include the gear 2409 or rack 2411.

It should be clear that each seat 1902 must be able to find or to reorient itself toward a target, based on the viewing direction of the occupant. This can be accomplished by providing a mechanism in the device that allows the device to find an absolute home position with respect to any objects to be viewed such as adjacent seats or video displays in the room. Where little magnetic inference is expected, such can be accomplished using a built in compass that faces the seat to north as a home position. GPS may also be used to provide inputs necessary for repositioning the seat. Preferably, the seats 1902 are arranged in an array on a floor or operational surface. The seats preferably have transceivers that transmit and receive signals to and from the controller. The floor includes an array of markers (not shown) that transmit location signals, arguably via active RFID signals. The seats 1902 emit a signal capable of exciting and reading RFID signals sent by the markers only a certain distance away from the seat. The seat's emitted signal excites the location markers and causes them to send a signal back to the seat, which combines the ID of this marker its own ID and sends this to the controller, preferably via wireless. For each seat 1902, the controller has marker ID information which locates the seat relative to the markers and, in this way, the location of each seat can be determined. Alternatively, each seat ID is associated with a corresponding market ID. Marker RFID signals emitted by excitement thereof are triangulated on by the seats 1902, thereby allowing the seats to find a home position on the floor. The markers can two or more beacons which, through calculation based on the inputs of the known beacon locations and triangulation techniques, helps the system know where each seat 1902 is. The markers can be embedded in the floor, on the floor surface or even suspended from the ceiling or from overhead support cables traversing the operational surface (dance floor). Each seat 1902 may be adapted to take a home position corresponding to the location of an associated marker. In this way, differing choreographed routines can be performed from a known start location.

In one embodiment, the seat 1902 includes an "approach" feature which upon selection (either by the controller, or by the occupant of the seat), advances the seat toward an occupied, facing seat after the device had rotated itself to face the adjacent individual in order to make communication easier. After the predetermined time of engagement, the seat withdraws to its initial position.

In still another embodiment, the array of seats 1902 are controlled by the controller in a manner that can be compared to a dance, in which the length of the song determines the time that each matched pair is engaged. As with dancing, between songs, partners may be exchanged. Because a signal is sent to the controller when a seat 1902 senses that a person is occupying the seat, the controller knows how many participants there are at any given time. Because each seat 1902 is adapted to communicate its occupancy status, and because the controller knows where each seat is, the controller, optionally applying AI technology to determine among options the best configuration, chooses from a group of pre-programmed "choreographed" routines that best serve the intended purpose of the engagement. Seats that are not occupied may be withdrawn, optionally, automatically from the "dance" floor, or via a live caddy charged with removing inactive seats 1902 from the "dance floor". Those occupied are applied to the chosen choreographed engagement routine.

Where the seats 1902 do nothing but rotate with respect to a fixed base whose orientation has been set to a known orientation, a resistive ring 2440 (such as a slip ring made of conductive material) centered in the seat can be used. Preferably this ring's periphery is outwardly disposed in the fixed foot 2242 yet invisible, located under the seat adjacent the floor 1904. The seat 1902 is mounted on a rotating axis 2444 rotating about an axel or on a ring ball bearing on a platform 2442 which is frictionally engaged with the floor on one end. This fixable platform 2442 preferably encloses the battery 2404, the weight of which proving stability to the device. An electrical connection is made from the battery to one end of the resistive ring 2440. A rolling or sliding electrical contact 2450 attached to the seat 1902 makes electrical contact with a conductive, exposed surface of the ring 2440 at different points along its periphery. Given that the length of the ring 2440 through which current has to pass varies, differing resistances are read out by the resistance measuring device 2452. This resistance measurement is compared with known resistances in for example a table for differing positions in order to determine the current relative rotational position of the seat 1902 (i.e., it's pointing orientation) with respect to the platform 2442 which is engaged with the floor 1904. If the platform 2442 is oriented to a known position at setup of an array of such seats, then a controller 2426 will know where each seat 1902 is pointing, and can control the forward and reverse rotation of the wheels 2416 through a control loop to move the seat to any relative desired rotational position. The resistance of the facing direction 2454 and other positions is known at points along the ring, thereby allowing the device to know its rotational location with respect to a base.

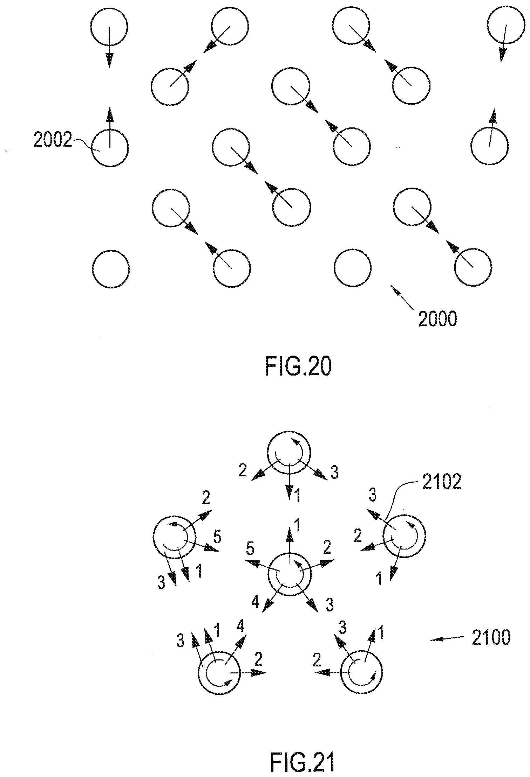

In the above arrangement, where individual seats 1902 rotate in orchestration with other seats, the arrays may be of different configurations. In one embodiment, the seat 1902 includes an "approach" feature which upon selection, advances the seat toward an adjacent seat after the device had rotated itself to face the adjacent individual in order to make communication easier. After the predetermined time of engagement, the seat withdraws to its initial position. Referring now to **FIG. 20****,** one possible array 2000 is shown. It can be seen by the arrows 2002 how matches can be made. Any number of possible variants are possible.

Referring now to **FIG. 21****,** an array 2100 of 6 seats 1902 are shown. The arrows 2102 have numbers associated with them which indicate 5 alternate configurations 1-5, that permit a suitable number of contacts to be made between adjacent seats 1902.

Each seat of any embodiment of this invention may have a card reader which reads an ID card encoded with name and profile information, including information marked as able to compare and share with other participants, further optionally including the goals of that individual (networking, dating, friendship or learning). The ID card is electronically readable and may be a magnetic card.

The system may include any number of programs/protocols/algorithms (PPAs) for making contact with adjacent (or even non-adjacent) seated participants. It may also include PPAs for directing the attention and so orientation of all (or selected) seated persons to a particular focal point or area. Such focal point may be set to that of the location of a speaker or moderator. It may also be set to direct some or all toward a particular video screen, in one embodiment, a video screen mounted on a wall. A PPA may then orient each or some toward one video screen presentation on one wall and then later to another wall. This permits those who enter the presentation space to enter when they wish. Once they sit in a seat and place their ear or headphones on, they are directed to the first of a series of video presentations, following sequentially to the next until the presentation is finished. This leads to a more immersive experience for users and is particularly useful for introductory videos in, for example, a museum. However, unlike the conventional museum theatre, where people have the opportunity to attend a one hour presentation only once an hour, using the invention, a participant is allowed to enter essentially at will and not have to wait until the entire presentation begins again (the presentation being divided into a number of segments, for example, corresponding to the number of wall mounted video screens).

In another advantage, it can be appreciated that elderly persons may use the device to be toured through a museum or other exhibit when the wheels 2416 are controlled to permit translation. This may also have a benefit to those who are not physically handicapped, to force a flow rate of visitors through a museum, thereby avoiding clutter and "traffic jams" at particular points of interest in the museum. This also enables the seats 1902 to provide information about the exhibits when the system calculates that a seat is adjacent the particular work of art. Where security is an issue, the system enhances security by ensuring a proper distance from a work of art, where, for example, leaving the seat causes an alarm which might indicate that a theft is being planned and should be thwarted.

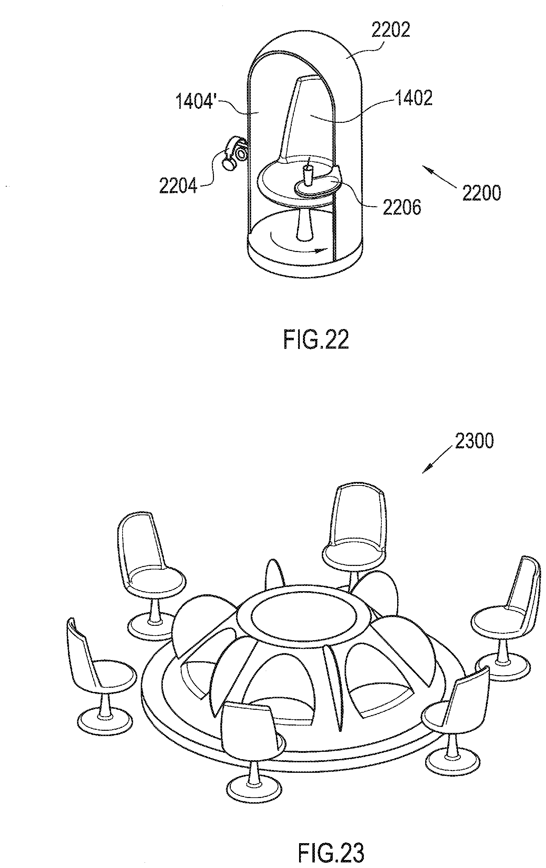

Referring now to **FIG. 22****,** an embodiment 2200 of the invention is shown, where the rotating chair 2200 includes a sound gathering/isolating bonnet 2202, which is preferably transparent so as to minimize blocking of the view by adjacently seated participants. The chair optionally includes audio earphones and a holder, which optionally has channel selection for different languages. This pod or chair 2200 is shown with a flat surface 2206 to conveniently rest a drink or snack.

Referring now to **FIG. 23****,** an embodiment 2300 of the invention is shown where the rotating couch resembles a UFO, which in this context could mean Unlimited Friendship Opportunities.

In another embodiment, the invention does away with seating altogether. In this embodiment, the invention consists of units encoded with software, and which are worn by the individuals involved, the units including proximity sensors to units which a match has or is to be established, which, after a time period allowing conversation, will sound an alarm until the units are separated a certain distance, forcing the participants to break off conversation and seek their next match. In one embodiment, provided that smart phones develop the ability to sense their relative proximity to another smart phone, the unit is a smart phone encoded with software. The units read biographical information of members that are within proximity to one another. When the units of those who are to be matched approach each other, the proximity sensed through these proximity sensors decreases, then the units indicate to their user that the match is near and when within a certain proximal distance, the indication stops or is silenced until the end of the time period, at which time, an alarm sounds again until the matched persons separate a certain distance. As already indicated, in this embodiment, seating or moving furniture dedicated to the system is completely done away with, requiring that the participants move themselves to make a match.

The invention, as is evident, has unlimited applications.

For a typical speed dating engagement, persons may subscribe, pay a fee, and share their information online. Once at the event, the participating and subscribed persons may be given an ID number or an ID card (encoded with an identifier for that person, and optionally including all their subscription information, including their characteristics and interests and those of others which they seek to make contact with), which when inserted into a card reader of the system, registers their information and allows common interests to be identified between individuals, and optionally displayed to the individuals at will, but particularly during the match as hints for conversation and as memory aids. At the end of the event, such cards can be retained, or turned in for re-use.

In a variant, a contact game may be played using the system of the invention, in which sets of questions which, near the end of their time-limited contact but prior to indexing to the next person, are presented to the user for answering. The questions are directed at the other person just contacted and are of a manner such as the following: "Now that you've met this person, how would you answer the following questions? Note that the person you'll be answering these questions about will be asking and answering the same questions about you, and you're answers will be graded based on your contacts own responses about themselves. The person who gets the most answers correct wins the game. Here are further sample questions: 1. This person is likely to flee for their lives when confronted face to face with a hungry grizzly bear. Y/N. 2. This person has much in common with Indiana Jones. Y/N. 3. This person prepares tea by putting milk in the cup first before they add hot water. Y/N. 4. This person goes with the flow of his or her surroundings. Y/N. 4. This person spends more time than you in front of the mirror every morning. Y/N. Preferably, the questions are provided such that they can answered with a simple yes or no. A tally is made of whose answers best matching the answers of the facing contacts and a prize coupon or other reward is issued to the person or persons with the highest score. This embodiment brings the interest of a video game together with the rewarding nature of traditional personal face to face contact.

In a variant applicable to all variants described herein, the system including a recommendation or matching engine, the invention operates on or is integrated in a social media service like "FACEBOOK^{®} , "LINKEDIN"^{®} or "XING"^{™}, "MEETUP"^{™} and "GOOGLEPLUS"^{®} to compare user biographical data and, based on preferences and permissions, recommends connections so as to facilitate face-to-face meeting opportunities. Of course, as used herein, a "face-to-face" meeting can be a physical face-to-face meeting or a virtual face-to-face meeting held via video conferencing or via live chat. However, it is preferred to place users in physical face to face contact so as to have eye-to-eye contact when meeting. First the recommendation engine (RE) needs inputs from users to be effective. The following are inputs that are considered by the matching engine: (1) user profile info; and (2) opt-in, providing permissions for comparison and recommendations. The RE makes comparison in order to generate recommendations for connection and/or for face-to-face meeting. Popups or in- or emails may then be sent to inform of possible matches, asking permission to set up a face-to-face meeting. If permission is granted, the RE contacts others and seeks a suitable meeting time. The RE sends a meeting proposal, much like an outlook meeting proposal, giving the user the ability to RSVP thereby adding to his calendar. Reminders of the upcoming meeting may then be sent. An evaluation form may also be sent out after the meeting and connections are proposed once again.

Populating a profile of inputs capable of comparing with other users in an efficient manner is not straight forward. Free-style inputs can be used but would require high processing power to apply what might amount to Artificial Intelligence algorithms to determine the meaning of the input phrases and determine whether the inputs are positive to a particular input or negative. For example, someone may input that they hate skiing or skiers (or that he hates persons who hate skiers). An algorithm may pick up on the activity skiing, but not properly attribute the negative aspect to this input, thus risking matching someone who loves skiing with someone who hates skiing. Consequently, it is best to analyse the inputs and ask follow questions about the inputs to determine whether the author is positively or negatively disposed to the input activity. For example, the free-style phrase may be scanned to identify the activity, in this example, skiing, by comparing words ending in "ing" with a list of activity words. If a match is found, a follow-up question to the user inputting the profile information he's given permission to compare might be, "you've written about skiing, right?" If the answer is yes, the follow-up question is "are you positively or negatively disposed to skiing?'' If positively, then this input is saved for comparison indicating that the person is positively disposed to skiing. If negatively, then the indication is that the person is negatively disposed to skiing. A follow-up question may be "are you a good skier, yes, or no?" The inputs populate a table with lines or columns represent the activity, and further inputs that are discernible populate data fields associated with the activity. Spell check can be run on the free style inputs to ensure that the input is grammatically correct and will be understandable to the system. Where errors are detected, correction can be required before the inputs are saved for later comparison.

A user uses user settings to provide, from a drop down menu, for example, permissions required to allow the recommendation engine to compare the profiles of users and to recommend contacts of those having matching profiles.

The proposed matches can be made based on weighting indications provided by each user of the importance of common characteristics sought by each individual. Location, for example, may be critical, particularly where the participant may only have access to public transportation. Hobbies or religion may be another. Experienced sociologists, psychiatrists, and/or psychologists may create a questionnaire whose questions they weight based on the importance of the answer to determining compatibility with another member. Based on user permissions and preferences, including whether or not the user wishes to participate in a networking event during which the user can meet those persons in their geographical area interested in meeting them, a user is provided with meeting times and places for meeting others with similar interests (i.e., suggested contacts). Promoted and propagated for example via franchising, social media enabled Cafés (e.g., "FACEBOOK"^{™} cafés) may be established which offer the invention as a means of putting people with similar interests in contact in a fair and orderly way, avoiding the annoyances of attempted monopolization (or harassment) by pushy individuals and giving shy persons (50 percent of the world's population) equal opportunity. Preferably, these cafés would have at least two meeting areas, one for walk-in visitors who might which to "roll the dice" and see who they might meet in this manner, and another for those who the system of the invention suggests matching. The invention gives each user the opportunity to meet each person before allowing the person into their network or friends and family circle. In this manner, abuses of the network can be minimized.

Alternatively or together with the features in the above paragraph, the invention provides a means for a user to permit the sending of written or e-invitations to physical meeting events that may be of interest to the individual user, and may indicate how far away from the user's local the user would be willing to receive such invitations. Optionally, the user can indicate that her or she intends to be at another location at a certain time or during a certain period of time, and may search events of potential interest at that time. The user, based on permissions provided by him and/or other users, may also be provided with means of meeting others having common interests in the locale which the first user intends to visit.

Optionally, the system of the invention, after face to face contact has been accomplished, logs the event for consideration in a KPI ranking the user, providing the opportunity to reward him for this physical, social interaction, and may also remind the user of the contact and solicits a "thank you" and/or a connection request. With permission, a log of the locations of physical contact may be stored for future reference.

It should be appreciated that many applications of the present invention may be formulated.

In another embodiment which seeks to match persons, facilitate contact and optionally create communities, the system and method of the invention includes several steps. In a first step, the system and method registers user profiles, optionally including ascertaining other user characteristics that the user is willing to connect with (e.g. mountain climber, age 25-35, living in a certain city or area). In a second step, the system and method optionally obtains permissions to compare profile and suggest connections, also with those who fall under criteria for user connection; and for what can be revealed to other possible matches. In a third step, the system and method, over time and in the background, compares user profiles by comparing profile inputs such as age, sex, city of residence, hobbies, etc. and/or user input characteristics of persons sought for connection. In a fourth step, the system and method indexes/flags most frequent, useful (such as having at least 3 but typically many more, matching characteristics) match criteria found in the comparison by assigning an index number or most frequent match identifier classification (hereinafter "code") to users with corresponding matching characteristics, such as according to a registration questionnaire questions, for example, age range, race, education level, profession, etc., thereby categorizing users via the indexing into smaller communities of users having common profile information. In a fifth step, the system and method suggests connections between members sharing the code, optionally providing user the ability to search based on location of users including in a generic or confidential manner (e.g., do not reveal names, providing menu option selectable listings) including further at least an option of brokering a face-to-face meeting with the suggested connections by at least some users). In a sixth step, where a brokered meeting by at least some users is selected, the system and method sends a meeting request between such users who've, by their selection or by a profile setting, permitted brokered meetings, soliciting input on possible meeting times, dates, places, etc. In a seventh step, the system and method repeats the above step until agreement is reached between suggested connections on time and place. In an eighth step, the system and method sends out reminders, optionally with an vCalendar Format (*.vcs) electronic calendar file, requesting RSVPs to such brokered meetings, optionally including coordinating with meeting locales such as bars or restaurants or amusements to ensure space availability. In a ninth step, after the meeting, the system and method solicits ratings for each connection, including providing the option of connecting with the attendees online.

Further, during a brokered meeting, the system and method of the invention at least initially limits participating users to a predetermined amount of time of face to face contact with the other users, with each individual receiving a turn at the face to face contact, thereby ensuring fair and orderly introductions between users.

The locale in which the system and method are used preferably includes infrastructure which enables the use of the networking software of the invention onsite.

A transceiver may be worn by members, the transceiver emitting and/or receiving the code of the community, optionally emitting the code readable by a lock which unlocks upon reading of the code to allow a code member to enter a restricted area reserved for members with the code.

Face-to-face contact, optionally with the networking roundtable of the invention, may take place in a room whose walls are at least partially, preferably completely covered with a video panels adapted to display images or videos selected by the organizer of the event, a host meeting locale manager and/or the event sponsor, to create an immersive environment therein keyed to the common interests of the community. Preferably all walls and the ceiling, or merely adjacent corner panels and optionally a ceiling panel may be used. Of course, a single panel provides more information and enhancement to a networking event than none at all.

The video devices are video panels that cover at least a substantial portion of the walls and/or ceiling of a room in the premises at which the brokered meeting is to take place.

Using the system and method described herein, the locale reserves and makes available the networking roundtable of the invention, wherein the members seat themselves in the roundtable in facing relationship, and the table turns to alternate the facing relationship, thereby optimally ensuring fair and orderly introductions between users, and to provide matching tools which, based on matches, suggests themes for discussion.

The system and method described herein further may promote the code characteristic of a particular community's attributes within that community, wherein promotional materials such as T-shirts, sunglasses, bags and other items are branded with the code and made available to members of that particular community.

A radio transceiver carried or worn by a member individual may transmit and receive the community code, wherein an alarm indicates whether another community member is within a certain area, and which optionally emits the code readable by a door lock to allow a code member to unlock a door to a space or room reserved for members with the code.

The transceiver further may include communication means which, when activated such as via contact with another transceiver, contact details are shared between the users associated with each transceiver, independently of whether the users match the criteria of a community that one or the other is a member of.

The system and method described herein, wherein a directional indicator device is integrated in the transceiver to help direct the two members toward each other to facilitate making an encounter.

The system and method described herein may use a profile database such as a multi-tenant database, wherein each user is a tenant that may run a search on the database to find matches, and is provided with a save results feature, saving the results under a particular community name or code, the code being unique and saved in a column of the database associated with each user, thereby allowing the users to solicit a meeting or meetings among the users found in the search.

Members of the community so formed may run searches on the community limited to a particular location, and thereby be able to set up meetings at any desired location.

A sponsor module may be integrated into the invention. This sponsor module for example seeks sponsors offering products and/or services targeting members of a community having interests which match the codes, and, assuming the size of any brokered meeting is of interest to potential sponsors, a sponsor or sponsors indicating their interest and who contracts with the purveyors of the system to sponsor the meeting is provided with sponsoring options selected from at least one of the group of sponsoring options consisting of :
a. providing custom sponsor banners online on the website of the community for which the code is associated, for a period of time where the meeting is memorialized online for a specified amount of time or for a number of visitors, and
b. providing a brokered meeting organizer and/or a meeting host location manager with custom sponsor banners, sponsor videos, samples (including samples for tasting or testing) and/or promotional items (such as T-shirts, mugs, pens) for delivery to the locale prior to the meeting or for display on display devices in the premises at which the brokered meeting is to take place.

In step b, the users displaying the banner or distributing the promotional items optionally do so together with a bar code on the banner or promotional item which when activated, enables the locale to receive payment on behalf of the sponsor for a determined percentage of the costs of the meeting, including optionally the cost of the first drink, or a percentage of all drinks purchased such that the locale can offer a special price such as a happy hour price (for example, a taxi company can offer discounted taxi services to return the participants to their homes). The code optionally being readable via a barcode reader, for example, by users who attend the meeting. The larger the number of users who scan the code (indicating that they've read the banner for example), the more the sponsor pays for such sponsoring opportunity.

The community codes or corresponding names representing these communities may be published embodied in a wearable item, such as on clothing items selected from at least one of the group of clothing items consisting of watches, wrist bands, headbands, T-shirts, shirts, sunglasses, baseball caps, wherein, where the code is not converted into a corresponding name that is descriptive, the nature of the community remains unknown to non-members of the community, thereby allowing individuals who are members of the community to inconspicuously brand themselves so that they are identifiable by other members of the community.

The wearable items may include a transponder and/or receiver adapted to emit and/or respectively receive the code at least by other members of the community, over a given distance range, thereby enabling impromptu contact between members.

A wearable transceiver may be integrated into the system and method of the invention. The transceiver has a receiver, a transmitter, a processor and a power source functionally connected so as to emit and receive a code such as the community code. The transceiver is adapted to be worn by a member of the community having the code associated therewith. The transceiver, in operation, scans a region within its scanning range for the presence of another transceiver emitting the community code, the reception of the code from another transmitter informing the member of the proximity of another member.

The wearable transceiver described herein may further include a direction indicator device having a pointer which, in operation, upon detecting another transmitter transmitting the code of the community, indicates the relative direction which the wearer must travel to approach the transmitter for the purpose of making contact with the wearer of the transmitter.

The transceiver may emit further code information enabling users to better ascertain whether to make the impromptu contact, such further code information selected from at least one of a group of further characteristics consisting of gender, marital status, age range and whether there is a compatible sexual orientation.

A person interested in contacting another person wearing an item displaying the community code, connects to a network having access to a portal associated with all communities and, typically via a URL to the community search input field, search the communities for that particular community, and seek to join that community.

The person seeking admittance to the community may be subjected to a questionnaire allowing the community to ascertain whether the person seeking admittance is compatible with the community and if so, provides a means for the seeking person to join the community.

The code further annotated with an individual identifier, allowing identification of the individual person.

A fee may be charged for searching for access in a given community. The fee may be charged commensurate with the stated wealth of the individual, thereby excluding the individual from a community that requires a certain stated wealth unless the commensurate fee is paid, thereby avoiding fraud in the declaration of stated wealth. A certain fee (of a substantial amount) can be charged to ensure that the member seeking out other wealthy members are themselves wealthy. Membership fees that are commensurate with the stated incomes of the individual members provide a revenue stream and minimize the chances that wealthy users will actually be dealing with other members that are not wealthy.

In an aspect of the invention, a community-making engine of the invention includes a keyword analyzer, a classifier adapted to classify the keywords, including indicating whether they are to be published and whether fixed or variable, a comparator, which compares the keywords to suggest whether similar communities exist, a matching engine to check for matches of the individual to an existing community and if no matches exist, or only relatively poor matches exist, the engine create a community, assuming that criteria such as moral criteria are met for the existence of the community. In other words, keywords must not be on an exclusion list in order to be able to automatically create a community.

A community-making engine may also be integrated into the system or method of the invention. This engine operates on a database of user profiles, permissions and preferences, over time and in the background: (a) compares user profiles by comparing profile inputs such as age, sex, city of residence, hobbies, etc. and/or user input characteristics of persons sought for connection; (b) indexes/flags most frequent, useful (such as having at least 3 but typically many more, matching characteristics) match criteria found in the comparison by assigning an index number or most frequent match identifier classification (hereinafter "code") to users, such as according to a registration questionnaire questions, for example, age range, race, education level, profession, etc., thereby categorizing users via the indexing into smaller communities of users having common profile information; (c) defines communities based on at least three common match criteria comprising at least a certain number of matches; (d) for at least the purpose of connecting persons of common interest, suggesting connections optionally based on location of users including in a generic or confidential manner (e.g., do not reveal names, providing menu option selectable listings including at least an option of brokering a face-to-face meeting with the suggested connections by at least some users) and optionally brokering face to face meetings between members; and (e) optionally following up with those members who have met via a brokered meeting face to face, suggesting connections and ratings.

In the registration process for a user of the system of the invention, when input by the user, each requested user's preference for contact-making is saved. The community-making engine analyses all keywords representing characteristics of those with whom they have indicated an interest in contacting. For example, Jane Doe may indicate as follows that she would be interested in making contact with a target group of people:
Male -- personal, static (some may argue this is time dependent)
25-30 -- personal, time dependent
Heterosexual -- personal, time dependent
Unmarried -- personal, time dependent
College degree - personal, static
Employed --- personal, time dependent
Resident of XYZ city - personal, time dependent

Because the community-making engine is concerned with creating a community, the engine optionally notes as variables the characteristics that are time dependent, monitoring these variables for changes that would disqualify them for the community. Even if these persons fall out of the community, the connections made between members are durable. The members however are informed of the changes that would take the member out of the community, or are simply informed that a variable has changed which places a connected member out of the community, optionally asking each member whether they wish to remain connected, or alternatively, providing a means of disconnecting the connection.

The engine also checks whether there are existing communities that fit the search criteria, or which match most of the criteria, indicating which communities already exist and providing an option of requesting membership in the existing communities. In addition, the user is asked which of their own characteristics they wish to publish or not to publish.

Once created, a search module allows users to search communities for users with additional characteristics, for example, city of residence or region of residence (defined by being so many miles from a city center, for example).

Depending on the number of registered users and the quantity of matches, further communities can be proposed. For example, after Jane Doe gives her preferences for a match, the engine checks whether there are more than a certain number of matches within a given geographical area or distance from the user. The engine then asks if Jane would like to become a member of the community (for which certain use terms are displayed and must be agreed to before becoming a member), which match these criteria starting from the largest number of matches to the least or vice versa. Once an affirmative answer is received, that user is associated with the code for the combination selected and may be contacted according to the contact terms of the community.

A global search and comparison reveals different categories of users. One could say "types" of users, except that some of the characteristics are variable. One thinks of a type of individual as something that doesn't vary. Consequently, the preference of using a descriptor other than "types" of users. The size of those categories is defined by the number of common characteristics each possesses. For example, the largest category is human, the next would be male or female, whereas the smallest would be the individual themselves. The two extremes, all users and a single individual, are not very useful to make searching more efficient or to help find others that match certain profile criteria. Therefore, the categories may be set in a logical manner using psychological information, and will therefore be restricted by at least 3 common characteristics, such as sex, age range, and some other limitation, such as general location (city, distance from a city).

The system preferably uses a multi-tenant database that defines communities, provides members with means to select a community monitor or leader, that monitor or leader having access to the community database of the MTDB.

The networking roundtable in which the locale provides an unlock code that is optionally specific to the locale of the brokered meeting, such unlock code being provided at a specific time period during operation of the networking roundtable, or only after a certain number of connections are made, the unlock code unlocking a feature of the software which enables connection via a smartphone or tablet with the users who signed up to the brokered meeting. Depending on the requirements set for unlocking, a unlock sequence or requirement can be found that encourages attendance at the brokered meeting and/or enables those who attend a brokered meeting and optionally, those who use the software or the networking roundtable of the invention at the locale during the networking time period to connect to each other using the software of the invention in order to ensure fair introductions before being permitted to get to know the invitees.

In an advantage, the invention combines virtual reality with a physical reality, facilitating getting to know one another online first, if desired. In any case, the face to face contact is made using the app and/or the physical embodiment of the invention and encourages contact with persons who are also physically proximate to one another, thereby better ensuring lasting personal connections and enabling off-line contact.

In another advantage, the invention presents at its core a means of bringing people of similar interests together face to face.

In another advantage, the invention facilitates the building of more meaningful relationships among people of like interests.

In an advantage, the invention facilitates networking in a manner which reduces awkward situations and provides discipline and efficiency in facilitating contact with a plurality of users.

In another advantage, the invention evens the playing field by putting shy persons, approximately 50% of the world's population, on the same footing with extroverted, imposing or outgoing persons when it comes to making the initial contact with strangers.

In another advantage, the invention makes contact with others efficient by limiting the initial contact to a prescribed time period and providing multiple opportunities for contact.

In another advantage, the invention challenges the memory of the participants because they will soon be placed in front of others with whom they must continue a conversation that was broken off by the system's movement. Fortunately, the console of the invention displays the name and points of common interest, as an aid to continue the conversation.

In an advantage, advertisers may then target members having the criteria that they specify.

In an advantage, the system and method of the invention provides a quick and less resource intensive searching of a large number of users by eliminating the need to search all registered members which may be a number as high as a billion persons. Instead, the search criteria is analyzed, and searching is limited to those whose codes or communities are already known to include one or more of the characteristics sought. If there is an exact match, then the searching member may be introduced to an existing community.

In another advantage, the codes can be published, and users can use the codes on T-Shirts or other clothing articles to make clear that they are members of this community. For example, a T-Shirt with "1234" expresses a certain commitment to this community and allows others to readily identify themselves, even confidentially, because only members of the community represented on the clothing need to know what the code implies. Consequently, members can inconspicuously brand themselves so that they are identifiable by other members of the community. Other synergistic inventions such as wearable radio transponders that emit the code such that others who have a receiver in their proximity may be warned via a signal, even a directional indicator pointing to the other member, of the presence of someone who shares certain common interests with the member. Such a feature would make it very easy indeed for persons of common interests to meet spontaneously at sporting events or other public events for example.

In an advantage, where a person sees another with a certain code, they may note the code and go online, seeking membership in that community. A questionnaire that must be answered correctly filters access to the community. The answers provided by the candidate member must be correct in order for that person to gain more information or seek membership in that community. The certain code may have a tag or add-on code that further identifies the individual, so that if the person who sees the individual wishes to contact that person, if they answer the questions correctly, they may be directed to a means of contacting that person in particular.

In an advantage, the system of the invention creates new markets for clothing or other items which may include the code or community identifier.

As will be appreciated by skilled artisans, the present invention may be embodied as a system, a device, or a method.

Moreover, the system contemplates the use, sale and/or distribution of any goods, services or information having similar functionality described herein.

The specification and figures should be considered in an illustrative manner, rather than a restrictive one and all modifications described herein are intended to be included within the scope of the invention claimed. Accordingly, the scope of the invention should be determined by the appended claims (as they currently exist or as later amended or added, and their legal equivalents) rather than by merely the examples described above. Steps recited in any method or process claims, unless otherwise expressly stated, may be executed in any order and are not limited to the specific order presented in any claim. Further, the elements and/or components recited in apparatus claims may be assembled or otherwise functionally configured in a variety of permutations to produce substantially the same result as the present invention. Consequently, the invention should not be interpreted as being limited to the specific configuration recited in the claims.

Benefits, other advantages and solutions mentioned herein are not to be construed as critical, required or essential features or components of any or all the claims.

As used herein, the terms "comprises", "comprising", or variations thereof, are intended to refer to a non-exclusive listing of elements, such that any apparatus, process, method, article, or composition of the invention that comprises a list of elements, that does not include only those elements recited, but may also include other elements described in the instant specification. Unless otherwise explicitly stated, the use of the term "consisting" or "consisting of" or "consisting essentially of" is not intended to limit the scope of the invention to the enumerated elements named thereafter, unless otherwise indicated. Other combinations and/or modifications of the above-described elements, materials or structures used in the practice of the present invention may be varied or adapted by the skilled artisan to other designs without departing from the general principles of the invention.

Other characteristics and modes of execution of the invention are described in the appended claims.

Copyright may be owned by the Applicant(s) or their assignee and, with respect to express Licensees to third parties of the rights defined in one or more claims herein, no implied license is granted herein to use the invention as defined in the remaining claims. Further, vis-à-vis the public or third parties, no express or implied license is granted to prepare derivative works based on this patent specification.

Multiple variations and modifications are possible in the embodiments of the invention described here. For instance, it is contemplated that a software app be provided which mimics the function of the invention in that participants who are screened for common interests are invited to spend a desired (preferably set) amount of time with each participant and the app then connects the participants successively with one another giving each participant a set amount of face time with each other. After this set time, the existing chat or connection is broken off and a new connection is established.

Although certain illustrative embodiments of the invention have been shown and described here, a wide range of changes, modifications, and substitutions is contemplated in the foregoing disclosure. While the above description contains many specific details, these should not be construed as limitations on the scope of the invention, but rather exemplify one or another preferred embodiment thereof. In some instances, some features of the present invention may be employed without à corresponding use of the other features. Accordingly, it is appropriate that the foregoing description be construed limited only by the attached claims.

## Claims

1. A disposition system (10) in combination with an online social networking system, the social networking system (2700) including user communication devices (2702), personal computing devices (2704) connected in a network (2710) comprising a server or servers (2754) hosting dedicated control software (2762) of which method steps are executed by a processor (2760) so as to access a database of user profile data of users to operate the said social networking system (2700), the system, during a registration step, providing the users an opt-in, permission and/or preferences selection device (2764) such as a drop-down menu, enabling users to provide permission
(a) to have a recommendation contact engine (2756) compare and share their user data such as user characteristics and preferences with those of other users for which matches on the compared and sharable user data are determined, and
(b) based on matching criteria, to be contacted via the recommendation contact engine (2756), wherein the social networking system (2700) is adapted to contact users identified by the recommendation contact engine (2756) as having common interests and invite such users to a meeting, the social networking system (2700) further adapted to propose times and/or locations for such suggested meetings, and to register user-indicated-suitable-dates for such meeting based on decision criteria, and wherein, once an engagement such as a virtual or physical face to face meeting between two recommended users is commenced, the social networking system (2700) is adapted to provide engaging users with a user communication device (2702) such as a display (2766) adapted to indicate to the users what the matching user characteristics are, thereby facilitating identification of common interests between users during an engagement between users, the disposition system further comprising disposition devices (12, 14, 16) such as seating (12), standing supports (14) and/or counter/table arrangements (16) adapted to dispose at least two persons face to face, a guiding system (22) guiding relative movement of at least one person (24) of the at least two persons to place the at least one person so as to successively face one of the at least one remaining persons for a desired time period, wherein transport of a user is controlled by a controller (2760), and wherein the controller (2760) reads inputs of presence or weight sensors (1502, 1602) associated with the disposition devices (12, 14, 16) to ensure that users disposed on the fixed and translatable seats (12), standing supports (14) and/or counter/table arrangements (16) are matched with each other for a time period.

2. The system of the above claim, wherein the sensed weight or sensed presence of a user involved in an engagement is registered in association with a particular engagement, thereby enabling identification of the user for further actions.

3. The system according to any one of the above claims including a user communication device (2702) which a user disposed on the disposition device can choose to command the controller (2760) to avoid further contact with the user with whom they have been matched, such command continuing until the presence detector (1502, 1602) detects that the user has lifted off the seat (12) or standing support (14).

4. The system according to any one of the above claims including a slip clutch to prevent movement when a jam occurs.

5. The system according to any one of the above claims including privacy baffles (702) between seats (12) or standing supports (14) which minimize distractions and so focus the attention of matched users.

6. The system according to any one of the above claims, wherein the guiding system (22) is activated by a motor (30).

7. The system of claim 1, wherein the motor consists of a gear motor, the guiding system (22) further activated by a rack and a pinion gear arrangement (32).

8. The system according to any one of the above claims, wherein the guiding system (22) is a conveyor arrangement (22') or a rotating platform (1802).

9. The system according to any one of the above claims, wherein the desired time period is a set time period, at the end of said set time period, translation or relative motion is initiated to place persons in another facing relationship.

10. The system according to any one of the preceding claims, wherein the controller (2760) controls the transport of users to establish alternating facing relationships for a time period, the controller (2760) being fed with detected inputs indicating the presence of users disposed on fixed and translatable seat(s) (12) or standing support(s) (14) and/or counter/table arrangement(s) (16), to match those users detected to at least another user in a prescribed way.

11. The system according to any one of the preceding claims, wherein the controller (2760) is configured in a way in which matches are made randomly, or consecutively according to programmed inputs.

12. The system according to any one of the preceding claims, wherein the controller (2760) is configured in a way in which, when presence detection indicates a match can be made, such as at least one user disposed on a fixed seat(s) (12), standing support(s) (14) and/or counter/table arrangement(s) (16), and at least one on a translatable seat(s) (12), standing support(s) (14) and/or counter/table arrangement(s) (16), the controller (512) initiates translation to make the match.

13. The system according to any one of the preceding claims, wherein the controller (2760) is configured in a way in which a warning light (513), such as a red light, indicates when it is not safe to take a seat or dispose a user on the translatable seat(s) (12), standing support(s) (14) and/or counter/table arrangement(s) (16).

14. The system according to any one of the preceding claims, wherein the controller (2760) is configured in a way in which the time period of engagement is counted down on a display (2766) visible to the users.

## Patentansprüche

1. Ein Dispositionssystem (10) in Kombination mit einem sozialen Online-Netzwerksystem, wobei das soziale Netzwerksystem (2700) Benutzerkommunikationsvorrichtungen (2702), persönliche Rechenvorrichtungen (2704), die in einem Netzwerk (2710) verbunden sind, das einen oder mehrere Server (2754) umfasst, der/die eine dedizierte Steuerungssoftware (2762) beherbergt/beherbergen, deren Verfahrensschritte von einem Prozessor (2760) ausgeführt werden, auf eine Datenbank von Benutzerprofildaten von Benutzern zuzugreifen, um das soziale Netzwerksystem (2700) zu betreiben, das System während eines Registrierungsschritts den Nutzern eine Opt-In-, Erlaubnis- und/oder Präferenz-Auswahlvorrichtung (2764), wie z.B. ein Drop-Down-Menü, bereitstellt, die es den Nutzern ermöglicht, eine Erlaubnis zu erteilen
(a) eine Empfehlungs-Kontaktmaschine (2756) ihre Benutzerdaten, wie z. B. Benutzereigenschaften und Präferenzen, mit denen anderer Benutzer vergleichen und teilen zu lassen, für die Übereinstimmungen mit den verglichenen und teilbaren Benutzerdaten ermittelt werden, und
(b) basierend auf übereinstimmenden Kriterien, über die Empfehlungs-Kontaktmaschine (2756) kontaktiert zu werden, wobei das Social-Networking-System (2700) angepasst ist, um Benutzer zu kontaktieren, die von Empfehlungs-Kontaktmaschine (2756) als solche mit gemeinsamen Interessen identifiziert wurden, und solche Benutzer zu einem Treffen einzuladen, wobei das Social-Networking-System (2700) weiterhin angepasst ist, um Zeiten und/oder Orte für solche vorgeschlagenen Treffen vorzuschlagen und um vom Benutzer angegebene geeignete Termine für solche Treffen basierend auf Entscheidungskriterien zu registrieren, und wobei, sobald ein Engagement, wie ein virtuelles oder physisches Treffen von Angesicht zu Angesicht zwischen zwei empfohlenen Benutzern begonnen wird, das Social-Networking-System (2700) so ausgelegt ist, dass es angreifende Benutzer mit einer Benutzerkommunikationsvorrichtung (2702) wie einer Anzeige (2766) versieht, die so ausgelegt ist, dass sie den Benutzern anzeigt, was die übereinstimmenden Benutzereigenschaften sind, wodurch die Identifizierung gemeinsamer Interessen zwischen Benutzern während eines Treffens zwischen Benutzern erleichtert wird, wobei das Dispositionssystem ferner Dispositionsvorrichtungen (12, 14, 16) wie Sitzgelegenheiten (12), Stehstützen (14) und/oder Theken-/Tischanordnungen (16), die so ausgelegt sind, dass sie mindestens zwei Personen von Angesicht zu Angesicht anordnen, ein Führungssystem (22), das die Relativbewegung mindestens einer Person führt, umfasst.
(24) der mindestens zwei Personen, um die mindestens eine Person zu platzieren, dass sie nacheinander einer der mindestens einen verbleibenden Personen für einen gewünschten Zeitraum gegenübersteht, wobei der Transport eines Benutzers durch eine Steuerung (2760) gesteuert wird, und wobei die Steuerung (2760) Eingaben von Anwesenheits- oder Gewichtssensoren (1502, 1602) liest, die mit den Anordnungsvorrichtungen (12, 14, 16) verbunden sind, um sicherzustellen, dass Benutzer, die auf den festen und verschiebbaren Sitzen (12), Stehhilfen (14) und/oder Theken-/Tischanordnungen (16) angeordnet sind, für einen Zeitraum abgestimmt sind.

2. Das System nach dem obigen Anspruch, wobei das erfasste Gewicht oder die erfasste Anwesenheit eines an einem Einsatz beteiligten Benutzers in Verbindung mit einem bestimmten Einsatz registriert wird, wodurch die Identifizierung des Benutzers für weitere Aktionen ermöglicht wird.

3. Das System nach einem der vorstehenden Ansprüche umfasst eine Benutzerkommunikationsvorrichtung (2702), die ein auf der Dispositionsvorrichtung befindlicher Benutzer wählen kann, um dem Steuergerät (2760) den Befehl zu erteilen, weiteren Kontakt mit dem Benutzer, mit dem er abgestimmt wurde, zu vermeiden, wobei dieser Befehl so lange gilt, bis der Anwesenheitsdetektor (1502, 1602) erkennt, dass der Benutzer vom Sitz (12) oder der Stehhilfe (14) abgehoben hat.

4. System nach einem der obigen Ansprüche mit einer Rutschkupplung zur Verhinderung von Bewegungen wenn ein Stau auftritt.

5. Das System nach einem der vorstehenden Ansprüche umfasst Sichtschutzwände (702) zwischen Sitzen (12) oder Stehstützen (14), die Ablenkungen minimieren und so die Aufmerksamkeit der zusammenpassenden Benutzer fokussieren.

6. System nach einem der vorstehenden Ansprüche, wobei das Führungssystem (22) durch einen Motor (30) aktiviert wird.

7. System nach Anspruch 1, wobei der Motor aus einem Getriebemotor besteht und das Führungssystem (22) außerdem durch eine Zahnstangen- und Ritzelanordnung (32) aktiviert wird.

8. System nach einem der vorstehenden Ansprüche, wobei das Führungssystem (22) eine Fördereinrichtung (22') oder eine Drehplattform (1802) ist.

9. Das System nach einem der obigen Ansprüche, wobei die gewünschte Zeitspanne eine festgelegte Zeitspanne ist und am Ende der festgelegten Zeitspanne eine Übergangs- oder Relativbewegung eingeleitet wird, um Personen in eine andere Gegenüberstellung zu bringen.

10. System nach einem der vorhergehenden Ansprüche, bei dem die Steuereinheit (2760) den Transport von Benutzern steuert, um für einen bestimmten Zeitraum abwechselnd zugewandte Beziehungen herzustellen, wobei die Steuereinheit (2760) mit detektierten Eingaben gespeist wird, die das Vorhandensein von Benutzern anzeigen, die sich auf einem oder mehreren festen und verschiebbaren Sitzen (12) oder einer oder mehreren Stehhilfen (14) und/oder einer oder mehreren Theken- /Tischanordnungen (16) befinden, um diese detektierten Benutzer mindestens einem anderen Benutzer in einer vorgegebenen Weise zuzuordnen.

11. System nach einem der vorhergehenden Ansprüche, wobei die Steuerung (2760) so konfiguriert ist, dass Übereinstimmungen nach dem Zufallsprinzip oder nacheinander gemäß programmierten Eingaben erfolgen.

12. System nach einem der vorhergehenden Ansprüche, wobei die Steuerung (2760) so konfiguriert ist, dass, wenn die Anwesenheitserkennung anzeigt, dass eine Übereinstimmung hergestellt werden kann, wie zum Beispiel mindestens ein Benutzer, der sich auf einem festen Sitz (12), einer festen Stütze (14) und/oder einer festen Theken-/Tischanordnung (16) befindet, und mindestens ein Benutzer auf einem verschiebbaren Sitz (12), einer festen Stütze (14) und/oder einer festen Theken-/Tischanordnung (16), die Steuerung (512) eine Verschiebung einleitet, um die Übereinstimmung herzustellen.

13. System nach einem der vorhergehenden Ansprüche, wobei die Steuerung (2760) so konfiguriert ist, dass eine Warnleuchte (513), wie zum Beispiel eine rote Leuchte, anzeigt, wenn es nicht sicher ist, einen Benutzer auf dem (den) verschiebbaren Sitz(en) (12), der (den) Stehhilfe(n) (14) und/oder der (den) Theken-/Tischanordnung(en) (16) Platz zu nehmen oder abzusetzen.

14. Das System nach einem der vorhergehenden Ansprüche, wobei die Steuerung (2760) so konfiguriert ist, dass die Zeitdauer des Eingriffs auf einem für die Benutzer sichtbaren Display (2766) heruntergezählt wird.

## Revendications

1. Système de disposition (10) en combinaison avec un système de réseautage social en ligne, le système de réseautage social (2700) comprenant des dispositifs de communication entre utilisateurs (2702), des dispositifs informatiques personnels (2704) connectés dans un réseau (2710) comprenant un serveur ou des serveurs (2754) hébergeant un logiciel de contrôle dédié (2762) dont les étapes de la méthode sont exécutées par un processeur (2760) afin d'accéder à une base de données de profils d'utilisateurs pour faire fonctionner ledit système de réseautage social (2700), le système, au cours d'une étape d'enregistrement, fournissant aux utilisateurs un dispositif de sélection (2764) d'acceptation, d'autorisation et/ou de préférences, tel qu'un menu déroulant, permettant aux utilisateurs de donner leur autorisation
(a) de demander à un moteur de contact de recommandation (2756) de comparer et de partager leurs données d'utilisateur, telles que leurs caractéristiques et préférences, avec celles d'autres utilisateurs pour lesquels des correspondances sur les données d'utilisateur comparées et partageables sont déterminées, et
(b) basé sur des critères de correspondances, d'être contacté par moteur de contact de recommandation (2756), dans lequel le système de réseautage social est adapté pour contacter des utilisateurs ayant des intérêts communs et inviter ces utilisateurs à une réunion, le système de réseautage social (2700) étant en outre adapté pour proposer des heures et/ou des lieux pour ces réunions suggérées et pour enregistrer les dates convenables indiquées par l'utilisateur pour une telle réunion sur la base des critères de décision et dans lequel, une fois qu'un engagement tel qu'une réunion virtuelle ou physique en face à face entre deux utilisateurs recommandés est commencée, le système de réseautage social (2700) est adapté pour fournir aux utilisateurs engagés un dispositif de communication utilisateur (2702) tel qu'un écran (2766) adapté pour indiquer aux utilisateurs quelles sont les caractéristiques de l'utilisateur correspondant, facilitant ainsi l'identification des intérêts communs, le système de réseautage social (2700) est adapté pour fournir aux utilisateurs engagés un dispositif de communication avec l'utilisateur (2702) tel qu'un écran (2766) adapté pour indiquer aux utilisateurs quelles sont les caractéristiques de l'utilisateur correspondant, facilitant ainsi l'identification des intérêts communs entre les utilisateurs au cours d'un engagement entre les utilisateurs, le système de disposition comprenant en outre des dispositifs de disposition (12, 14, 16) tels que des sièges (12), des supports debout (14) et/ou des dispositions de comptoir/table (16) adaptés à disposer au moins deux personnes face à face, un système de guidage (22) guidant le mouvement relatif d'au moins une personne
(24) d'au moins deux personnes pour placer l'au moins une personne de manière à ce qu'elle fasse successivement face à l'une des au moins une personnes restantes pendant une période souhaitée, dans laquelle le transport d'un utilisateur est contrôlé par un contrôleur (2760), et dans laquelle le contrôleur (2760) lit les entrées des capteurs de présence ou de poids (1502, 1602) associés aux dispositifs de disposition (12, 14, 16) pour s'assurer que les utilisateurs disposés sur les sièges fixes et mobiles (12), les supports debout (14) et/ou les arrangements de comptoir/table (16) sont jumelés les uns avec les autres pendant un temps donné.

2. Le système de la revendication précédente, dans lequel le poids ou la présence détectés d'un utilisateur impliqué dans un engagement est enregistré en association avec un engagement particulier, permettant ainsi l'identification de l'utilisateur pour des actions ultérieures.

3. Le système selon l'une quelconque des revendications ci-dessus comprenant un dispositif de communication avec l'utilisateur (2702) qu'un utilisateur disposé sur le dispositif de disposition peut choisir pour commander au contrôleur (2760) d'éviter tout contact ultérieur avec l'utilisateur avec lequel il a été apparié, cette commande continuant jusqu'à ce que le détecteur de présence (1502, 1602) détecte que l'utilisateur s'est levé du siège (12) ou du support de position debout (14).

4. Le système selon l'une quelconque des revendications précédentes comprenant un embrayage à glissement pour empêcher le mouvement lorsqu'un bourrage se produit.

5. Le système selon l'une quelconque des revendications ci-dessus comprenant des déflecteurs d'intimité (702) entre les sièges (12) ou les supports debout (14) qui minimisent les distractions et concentrent ainsi l'attention des utilisateurs jumelés.

6. Le système selon l'une quelconque des revendications précédentes, dans lequel le système de guidage (22) est activé par un moteur (30).

7. Le système de la revendication 1, dans lequel le moteur consiste en un moteur à engrenages, le système de guidage (22) étant en outre activé par une crémaillère et un pignon (32).

8. Le système selon l'une quelconque des revendications précédentes, dans lequel le système de guidage (22) est un convoyeur (22') ou une plate-forme rotative (1802).

9. Le système selon l'une quelconque des revendications précédentes, dans lequel la période de temps souhaitée est une période définie, à la fin de ladite période de temps définie, la translation ou le mouvement relatif est initié pour placer des personnes dans une autre relation de face à face.

10. Le système selon l'une quelconque des revendications précédentes, dans lequel le contrôleur (2760) contrôle le transport des utilisateurs afin d'établir des relations de face alternées pendant un **certain** temps, le contrôleur (2760) étant alimenté par des entrées détectées indiquant la présence d'utilisateurs disposés sur des sièges fixes et mobiles
(12) ou des supports debout (14) et/ou des arrangements de comptoirs/tables (16), afin de faire correspondre les utilisateurs détectés à au moins un autre utilisateur d'une manière prescrite.

11. Le système selon l'une quelconque des revendications précédentes, dans lequel le contrôleur (2760) est configuré de manière à ce que les correspondances soient effectuées de manière aléatoire ou consécutive en fonction d'entrées programmées.

12. Le système selon l'une quelconque des revendications précédentes, dans lequel le contrôleur (2760) est configuré de manière à ce que, lorsque la détection de présence indique qu'une correspondance peut être établie de sorte qu'au moins un utilisateur disposé sur un siège fixe (12), un support debout (14) et/ou un arrangement de comptoir/ table (16), et au moins un utilisateur disposé sur un siège mobile (12), un support debout (14) et/ou un arrangement de comptoir/table (16), le contrôleur (512) initie la translation pour établir la correspondance.

13. Le système selon l'une quelconque des revendications précédentes, dans lequel le contrôleur (2760) est configuré de manière à ce qu'un voyant d'avertissement (513), tel qu'un voyant rouge, indique quand il n'est pas sûr de prendre place ou de disposer un utilisateur sur le(s) siège(s) coulissant(s) (12), le(s) support(s) debout (14) et/ou les arrangement de comptoir(s) ou table(s) (16).

14. Le système selon l'une quelconque des revendications précédentes, dans lequel le contrôleur (2760) est configuré de manière à ce que la période d'engagement soit décomptée sur un écran (2766) visible par les utilisateurs.
